(19) Europäisches Patentamt
European Patent Office
Office européen des brevets

(11) EP 2 954 012 B1

(12) **EUROPÄISCHE PATENTSCHRIFT**

(45) Veröffentlichungstag und Bekanntmachung des Hinweises auf die Patenterteilung:
**19.07.2017 Patentblatt 2017/29**

(21) Anmeldenummer: **14703364.1**

(22) Anmeldetag: **07.02.2014**

(51) Int Cl.:
***C09D 7/00*** *(2006.01)*

(86) Internationale Anmeldenummer:
**PCT/EP2014/052457**

(87) Internationale Veröffentlichungsnummer:
**WO 2014/122274 (14.08.2014 Gazette 2014/33)**

(54) **ALPHA,OMEGA-HYDROXYFUNKTIONALISIERTER OLIGOESTER ALS HAFTUNGSVERMITTLER IN WÄSSRIGEN BASISLACKEN**

ALPHA,OMEGA-HYDROXYL-FUNCTIONALISED OLIGOESTER AS AN ADHESION PROMOTER IN AQUEOUS BASE COATS

OLIGOESTER ALPHA,OMEGA-HYDROXYFONCTIONNALISÉ EN TANT QUE PROMOTEUR D’ADHÉSION DANS DES PEINTURES DE BASE AQUEUSES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.02.2013 US 201361761750 P**
**07.02.2013 EP 13154427**

(43) Veröffentlichungstag der Anmeldung:
**16.12.2015 Patentblatt 2015/51**

(73) Patentinhaber: **BASF Coatings GmbH**
**48165 Münster (DE)**

(72) Erfinder:
- **ANDERSEN, Audree**
**48329 Havixbeck (DE)**
- **SAEDLER, Markus**
**48163 Münster (DE)**
- **RAKA, Fatmir**
**48149 Münster (DE)**
- **FREITAG, Nicole**
**48163 Münster (DE)**
- **SCHNIEDERS, Britta**
**49716 Meppen (DE)**
- **STEFFENS, Alexandra**
**48161 Münster (DE)**
- **CORTEN, Cathrin**
**59423 Unna (DE)**
- **FÖLLING, Frederik**
**48165 Münster (DE)**

(74) Vertreter: **BASF IP Association**
**BASF SE**
**G-FLP-C006**
**67056 Ludwigshafen (DE)**

(56) Entgegenhaltungen:
**EP-A1- 1 914 282**
**WO-A1-2011/000525**
**WO-A1-2011/037818**
**WO-A1-2013/064506**
**DE-A1-102004 005 207**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 954 012 B1

## Beschreibung

Die Erfindung betrifft einen pigmentierten wässrigen Basislack. Sie betrifft weiterhin ein Verfahren zur Herstellung einer Mehrschichtlackierung auf einem Kunststoffsubstrat sowie eine Mehrschichtlackierung auf einem Kunststoffsubstrat. Schließlich betrifft die vorliegende Erfindung die Verwendung eines alpha,omega-hydroxyfunktionalisierten Oligoesters zur Haftungsverbesserung in einem pigmentierten wässrigen Basislack.

Kunststoffe haben sich im Rahmen der Fahrzeuglackierung als Materialien für Fahrzeugteile sowie Fahrzeuganbau- und -zubehörteile sowohl im Innen- als auch im Außenbereich durchgesetzt. Kunststoffe werden ebenso wie andere Werkstoffe aus dekorativen Gründen (beispielsweise Farbgebung) und/oder aufgrund technischer Zweckmäßigkeit (beispielsweise Licht- und Wetterbeständigkeit) mit entsprechenden Beschichtungsmitteln beschichtet beziehungsweise lackiert. Eine wichtige Voraussetzung für eine qualitativ hochwertige Beschichtung ist die Haftung zum Untergrund, das heißt zur Substratoberfläche. Es ist allgemein bekannt, dass gerade bei der Beschichtung beziehungsweise Lackierung von Kunststoffen, mitunter gravierende Haftungsprobleme zum Kunststoffuntergrund auftreten können. Um eine akzeptable Haftung des jeweiligen Beschichtungsmittels zu erreichen, werden solche Kunststoffe herkömmlich einer oberflächenaktivierenden Vorbehandlung unterworfen. Die am häufigsten angewendeten Verfahren sind das Beflammen, die Plasmabehandlung und die Corona-Entladung.

Ebenso ist es bekannt, zur Haftungsverbesserung haftungsvermittelnde Substanzen, insbesondere chlorierte Polyolefine, einzusetzen. Ihr Einsatz ist jedoch unter ökologischen Gesichtspunkten sehr nachteilig.

Der Einsatz der haftungsvermittelnden Substanzen erfolgt beispielsweise über Haftprimer, die die haftungsvermittelnden Substanzen enthalten und in einem separaten Beschichtungsvorgang auf das Kunststoffsubstrat appliziert werden. Ebenfalls möglich ist der direkte Zusatz von haftungsvermittelnden Substanzen zu dem Beschichtungsmittel, mit dem die dekorative und/oder technisch zweckmäßige Beschichtung hergestellt werden soll. Beim Einsatz wässriger Beschichtungsmittel, die sich aus ökologischen Gesichtspunkten auch in der Kunststoffbeschichtung immer mehr durchsetzen, sind die Haftungsprobleme zwischen Kunststoffsubstrat und Beschichtungsmittel besonders eklatant.

Große Probleme bereitet beispielsweise die Beschichtung von Kunststoffsubstraten wie zum Beispiel mit Ethylen-Propylen-Dien-Mischpolymeren modifiziertem Polypropylen (PP-EPDM) sowie mit Polybutadienterephthalat modifiziertem Polycarbonat (PC-PBT) und Polyurethan (PUR-RIM). PP-EPDM Substrate können nach heutigem Kenntnisstand nur nach einer Vorbehandlung durch Beflammen beschichtet werden. Für PC-PBT und PUR-RIM Substrate ist kein Beflammen notwendig. Allerdings ist zu mindestens das Abwischen der entsprechenden Substrate mit Lösemitteln erforderlich, um eine ausreichende Haftung zu erreichen. Aber auch nach einer solchen Vorbehandlung ist die Haftung nicht in allen möglichen Fällen ausreichend.

Die WO 2013/064506 A1 offenbart ein Verfahren zur Beschichtung von Kunststoffsubstraten mit einem wässrigen Beschichtungsmittel, welches ein OHfunktionelles Polyesterharz als Bindemittel enthalten kann, wobei das Beschichtungsmittel auf die Oberfläche eines Kunststoffsubstrats appliziert wird und wobei vor der Applikation das Kunststoffsubstrat bei einer Umgebungstemperatur von 60 °C bis 160 °C für eine Zeitdauer von 1 min bis 20 min getempert wird, gefolgt von einem Beflammungsschritt, der innerhalb von 90 min nach Beendigung des Temperns zu erfolgen hat.

Die WO 2011/037818 A1 betrifft Antiablaufmittel enthaltende Beschichtungsmittelzusammensetzungen, wobei die Antiablaufmittel Reaktionsprodukte aus einem Isocyanat und einem fluorierten Amin sind. Das Antiablaufmittel kann eines oder mehrere Polymere enthalten, wobei es sich bei diesen auch um Polyesterpolymere handeln kann.

Die WO 2011/000525 A1 offenbart vernetzbare Polyurethandispersionen, die einen hydroxyfunktionellen aromatischen terephthalsäurebasierten Polyester mit einer durchschnittlichen OH-Funktionalität von 1,5 bis 3,5 enthalten.

Die DE 10 2004 005 207 A1 beschreibt die Verwendung strahlenhärtbarer Harze enthaltend ein Keton-Aldehydharz und/oder Harnstoff-Aldehydharz und eine Verbindung, die eine gegenüber den vorgenannten Bestandteilen reaktive Gruppierung und eine ethylenisch ungesättigte Gruppierung aufweist, unter anderem in strahlungshärtbaren Beschichtungsstoffen.

Die EP 1 914 282 A1 betrifft ein wässriges Beschichtungsmittel auf Basis eines Bindemittelgemisches als Basislack, enthaltend eine hydroxyfunktionelle Polyesterpolyurethandispersion.

Der vorliegenden Erfindung lag daher die Aufgabe zu Grunde, die Haftung von wässrigen pigmentierten Basislacken zu den angrenzenden Schichten zu verbessern. Insbesondere bestand die Aufgabe darin, die Haftung von wässrigen pigmentierten Basislacken auf Kunststoffsubstraten zu verbessern. Dies soll durch den Einsatz von Haftungsvermittlern im Basislack erreicht werden, ohne dass dabei ein weiterer Vorbehandlungsschritt wie zum Beispiel ein Beflammen der Kunststoffoberfläche oder das Abwischen mit Lösemitteln notwendig ist.

Die Haftung der besagten Basislacke soll auch nach einer Belastung des Substrats zum Beispiel nach Bewitterung erhalten bleiben. Darüber hinaus sollen die Haftungsvermittler enthaltenden wässrigen pigmentieren Basislacke eine hervorragende Lagerstabilität aufweisen. Darunter ist insbesondere zu verstehen, dass nach mehrmonatiger Lagerung keine signifikante Verschlechterung der erzielbaren Haftungsverbesserung zu verzeichnen ist.

Diese Aufgabe wird überraschenderweise durch einen pigmentierten wässrigen Basislack gelöst, welcher dadurch gekennzeichnet ist, dass dieser mindestens einen alpha,omega-hydroxyfunktionalisierten Oligoester enthält, welcher eine OH-Zahl von 25 bis 95 mg KOH/g, einen theoretischen Kohlenstoff-Kohlenstoff-Doppelbindungsgehalt von 0,5 bis 2,5 mmol/g, ein zahlenmittleres Molekulargewicht von 2500 bis 6000 g/mol und ein gewichtsmittleres Molekulargewicht von 15000 bis 30000 g/mol besitzt, der besagte alpha,omega-hydroxyfunktionalisierte Oligoester zudem mindestens eine teilweise oder vollständig versalzte Säuregruppe enthält und wobei zudem die Summe über die gewichtsprozentualen Anteile aller alpha,omega-hydroxyfunktionalisierten Oligoester 0,5 bis 10 Gew.-% bezogen auf den Gesamtfestkörperanteil des pigmentierten wässrigen Basislacks beträgt.

Der Begriff Basislack dient als Bezeichnung für einen in der Automobil-Lackierung oder allgemeinen Industrielackierung üblichen farbgebenden Zwischenbeschichtungsstoff, der auf einem Substrat aufgebracht wird. Der Basislack bildet üblicherweise die erste Schicht einer sogenannten Zweischichtlackierung. Die zweite, oberste Schicht ist dann ein Klarlack, der die Basislackierung vor Witterungseinflüssen sowie mechanischen und chemischen Einflüssen schützt.

Unter vollständiger Versalzung soll im Folgenden die Deprotonierung aller im erfindungsgemäß einzusetzenden alpha,omega-hydroxyfunktionalisierten Oligoester vorhandenen Säuregruppen verstanden werden. Hierzu werden üblicherweise Basen, bevorzugt organische Basen, eingesetzt. Besonders bevorzugt werden Amine eingesetzt. Ganz besonders bevorzugt handelt es sich hier um Dimethylethanolamin (DMEA), Triethylamin (TEA), Diethylamin, Pyridin und $NH_3$. In besonderem Maße bevorzugt ist DMEA.

Um eine vollständige Deprotonierung der besagten Säuregruppen zu erreichen, muss ein Überschuss an Base eingesetzt werden. Dies bedeutet, dass pro Äquivalent Säure mehr als ein Äquivalent Base verwendet wird.

Unter teilweiser Versalzung soll verstanden werden, dass pro Äquivalent Säure, welches in dem besagten alpha,omega-hydroxyfunktionalisierten Oligoester vorhanden ist, weniger als ein Äquivalent Base eingesetzt wird. Bevorzugt werden bezogen auf die Menge der vorhandenen Säuregruppen 0,2 bis 1,0 Äquivalente, besonders bevorzugt 0,3 bis 0,9 Äquivalente und ganz besonders bevorzugt 0,4 bis 0,8 Äquivalente einer geeigneten Base eingesetzt.

Die Menge der einzusetzenden Base ist in jedem Fall so zu wählen, dass das resultierende teilweise oder vollständig versalzte Produkt wasserdispergierbar ist. Hierunter ist zu verstehen, dass der alpha,omega-hydroxyfunktionalisierte Oligoester nicht vollständig wasserlöslich sein darf. Dem Durchschnittsfachmann ist bekannt, dass die Verträglichkeit eines Haftvermittlers in wasserbasierten Lacksystemen dergestalt zu sein hat, dass sich dieser an den Grenzflächen des Lacksystems anreichert, um so die Haftung zu den angrenzenden Schichten verbessern zu können. Ist die Wasserlöslichkeit zu groß, so erfolgt die besagte Anreicherung an den Grenzflächen nicht und es tritt keine Haftungsverbesserung ein.

Der Begriff alpha,omega-hydroxyfunktionalisierter Oligoester bezeichnet einen Oligoester, an dessen entgegengesetzten Enden, welche mit alpha beziehungsweise omega bezeichnet werden, sich jeweils eine Hydroxylgruppe befindet. Hierunter ist zu verstehen, dass ein solcher Oligoester an beiden Enden durch jeweils eine Monomereinheit terminiert ist, welche jeweils genau eine Hydroxylgruppe trägt. Handelt es sich um einen verzweigten Oligoester, so bezeichnen alpha und omega die Enden der längsten Polymerkette im Monomer. Die Länge bemisst sich dabei an der Anzahl der eingebauten Monomere. Es ist weiterhin nicht ausgeschlossen, dass der besagte alpha,omega-hydroxyfunktionalisierte Oligoester weitere Hydroxylgruppen besitzt. Es ist grundsätzlich bevorzugt, dass der erfindungsgemäß einzusetzende alpha,omega-hydroxyfunktionalisierte Oligoester genau zwei Hydroxylgruppen jeweils eine in alpha- und eine in omega-Position besitzt. Es ist besonders bevorzugt, dass der erfindungsgemäß einzusetzende alpha,omega-hydroxyfunktionalisierte Oligoester genau zwei Hydroxylgruppen jeweils eine in alpha- und eine in omega-Position besitzt und zudem linear ist.

Wie sich bereits aus den oben genannten Kennzahlen ergibt, bezeichnet der Begriff alpha,omega-hydroxyfunktionalisierter Oligoester ein Gemisch aus verschiedenen alpha,omega-hydroxyfunktionalisierten Oligoesterspezies mit unterschiedlichem Molekulargewicht. Bei dem erfindungsgemäß einzusetzenden alpha,omega-hydroxyfunktionalisierten Oligoester handelt es sich um Polykondensationsprodukte. Wie dem Fachmann bekannt ist erhält man bei Durchführung einer entsprechenden Polykondensationsreaktion zwangsläufig ein Gemisch aus besagten alpha,omega-hydroxyfunktionalisierten Oligoestern.

Die Verwendung des Begriffs "oligo" soll darauf hinweisen, dass es sich bei dem erfindungsgemäß einzusetzenden alpha,omega-hydroxyfunktionalisierten Oligoester um vergleichsweise kurze Polyester handelt, welche kleine zahlen- bzw. gewichtsmittlere Molekulargewichte in den oben genannten Bereichen besitzen.

Der besagte alpha,omega-hydroxyfunktionalisierte Oligoester besitzt eine OH-Zahl von 25 bis 95 mg KOH/g, bevorzugt 35 bis 85 mg KOH/g und besonders bevorzugt von 45 bis 65 mg KOH/g. Die OH-Zahl kann nach DIN 53240 wie folgt bestimmt werden. Die Die OH-Gruppen werden durch Acetylierung mit einem Überschuss Essigsäureanhydrid umgesetzt. Anschließend wird das überschüssige Essigsäureanhydrid durch Wasserzugabe zur Essigsäure aufgespalten und die gesamte Essigsäure mit ethanolischer KOH zurücktitriert. Die OH-Zahl gibt die Menge KOH in mg an, die der bei der Acetylierung von 1g Substanz gebundenen Menge Essigsäure äquivalent ist.

Hinsichtlich der in dieser Patentanmeldung definierten Bereiche für das zahlen- und das gewichtsmittlere Molekulargewicht sei an dieser Stelle darauf hingewiesen, dass der Fachmann sich darüber im Klaren ist, dass immer nur solche Kombinationen des zahlen- und des gewichtsmittleren Molekulargewichtes möglich sind, bei denen das zahlengewichtete nicht größer als das gewichtsmittlere Molekulargewicht ist.

Der besagte alpha,omega-hydroxyfunktionalisierte Oligoester besitzt ferner ein zahlenmittleres Molekulargewicht von 2500 bis 6000 g/mol, bevorzugt von 3200 bis 5000 g/mol und besonders bevorzugt von 3500 bis 4500 g/mol und ein gewichtsmittleres Molekulargewicht von 15000 bis 30000 g/mol, bevorzugt 15000 bis 28000 g/mol und besonders bevorzugt von 20000 bis 26000 g/mol.
Die Bestimmung des zahlenmittleren und des gewichtsmittleren Molekulargewichts erfolgt mittels Gelpermeationschromatographie mit Tetrahydrofuran als Elutionsmittel und unter Verwendung eines Polystyrol-Standards. Das Säulenmaterial besteht aus Styrol-Divinylbenzol-Copolymeren. Der alpha,omega-hydroxyfunktionalisierte Oligoester wird in seiner neutralisierten Form gemessen. Zur Neutralisation wird DMEA eingesetzt.

Es ist erfindungswesentlich, dass der besagte alpha,omega-hydroxyfunktionalisierte Oligoester einen theoretischen Kohlenstoff-Kohlenstoff-Doppelbindungsgehalt von 0,5 bis 2,5 mmol/g, bevorzugt von 1,5 bis 2 mmol/g und besonders bevorzugt von 1,2 bis 1,8 mmol/g besitzt. Unter dem theoretischen Kohlenstoff-Kohlenstoff-Doppelbindungsgehalt ist die Stoffmenge der Kohlenstoff-Kohlenstoff-Doppelbindungen in der Einheit mmol bezogen auf die Masse des alpha,omega-hydroxyfunktionalisierten Oligoesters in der Einheit Gramm zu verstehen. Als Kohlenstoff-Kohlenstoff-Doppelbindungen im Sinne der vorliegenden Erfindung werden keine solchen verstanden, die formal Bestandteil eines aromatischen Rings sind. So bleiben beispielsweise die drei formal in einem Benzolring enthaltenen Kohlenstoff-Kohlenstoff-Doppelbindungen bei der Berechnung des theoretischen Kohlenstoff-Kohlenstoff-Doppelbindungsgehalts unberücksichtigt. Der theoretische Kohlenstoff-Kohlenstoff-Doppelbindungsgehalt, in der unten dargestellten Formel als Doppelbindungsgehalt bezeichnet, wird wie folgt berechnet:

$$Doppelbindungsgehalt = \frac{Stoffmenge(Doppelbindungen)}{Masse(Oligoester)}.$$

Dabei bezeichnet der Ausdruck "Stoffmenge(Doppelbindungen)" die Stoffmenge der Kohlenstoff-Kohlenstoff-Doppelbindungen in der Einheit mmol und der Ausdruck "Masse(Oligoester)" die Masse des alpha,omega-hydroxyfunktionalisierten Oligoesters in der Einheit Gramm.

Die Masse des alpha,omega-hydroxyfunktionalisierten Oligoesters ist die Summe über Massen der zu seiner Herstellung eingesetzten Monomere abzüglich der Masse des dabei entstehenden Wassers, wobei von einem vollständigen Umsatz aller Anhydrid- beziehungsweise Carbonsäuregruppen ausgegangen wird. Die Stoffmenge der Kohlenstoff-Kohlenstoff-Doppelbindungen ergibt sich aus der Stoffmenge der eingesetzten ungesättigten Monomere. Werden beispielsweise ausschließlich einfach ungesättigte Monomere, wie zum Beispiel Maleinsäureanhydrid, eingesetzt, so ist die Stoffmenge der Kohlenstoff-Kohlenstoff-Doppelbindungen gleich der Stoffmenge der eingesetzten ungesättigten Monomere. Werden beispielsweise zweifach ungesättigte Monomere eingesetzt, so ist die Stoffmenge der durch solche Monomere in den alpha,omega-hydroxyfunktionalisierten Oligoester eingeführten Kohlenstoff-Kohlenstoff-Doppelbindungen doppelt so groß wie die eingesetzte Stoffmenge des entsprechenden zweifach ungesättigten Monomers.

Bei der mindestens einen Säuregruppe des erfindungsgemäß einzusetzenden alpha,omega-hydroxyfunktionalisierten Oligoesters handelt es sich bevorzugt um eine Carbonsäuregruppe ($-CO_2H$), eine Sulfonsäuregruppe ($-SO_3H$), einen Phosphorsäuremonoester ($-O-P(O)(OH)_2$), einen Phosphorsäurediester der allgemeinen Formel

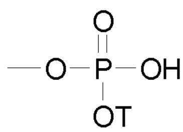

wobei es sich bei T um einen aliphatischen oder aromatischen Rest handelt oder um monosubstituierte Sulfate ($-OSO_3H$). Besonders bevorzugt handelt es sich um eine Carbonsäure- oder eine Sulfonsäuregruppe. Ganz besonders bevorzugt handelt es sich um Carbonsäuregruppen.

Der erfindungsgemäß einzusetzende alpha,omega-hydroxyfunktionalisierte Oligoester enthält im Mittel mindestens eine Säuregruppe. Bevorzugt enthält der besagte alpha,omega-hydroxyfunktionalisierte Oligoester im Mittel 1 bis 3, besonders bevorzugt 1 bis 2 und ganz besonders bevorzugt genau eine Säuregruppe.

Es ist weiterhin bevorzugt, dass sich die besagten Säuregruppen nicht an einer endständigen Position im erfindungsgemäß einzusetzenden alpha,omega-hydroxyfunktionalisierten Oligoester befinden sollen. Hierunter ist zu verstehen, dass das Monomer, über welches die Säuregruppen in den alpha,omega-hydroxyfunktionalisierte Oligoester eingeführt wird, keine endständige Monomereinheit im besagten alpha,omega-hydroxyfunktionalisierten Oligoester ist.

Der erfindungsgemäß einzusetzende alpha,omega-hydroxyfunktionalisierte Oligoester kann grundsätzlich verschiedene Säuregruppen enthalten. Dies ist zum Beispiel möglich, indem bei seiner Herstellung Monomere mit verschiedenen Säuregruppen eingesetzt werden. In Abhängigkeit von der Molmasse der jeweiligen alpha,omega-hydroxyfunktionalisierten Oligoesterspezies, ist es möglich, dass sich in einer alpha,omega-hydroxyfunktionalisierten Oligoesterspezies unterschiedliche Säuregruppen befinden. Es ist aber ebenso denkbar, dass eine erste alpha,omega-hydroxyfunktionalisierte Oligoesterspezies eine Säuregruppe trägt, während eine zweite eine von der Säuregruppe der ersten alpha,omega-hydroxyfunktionalisierte Oligoesterspezies verschiedene Säuregruppe trägt. Bevorzugt enthält der erfindungsgemäß einzusetzende alpha,omega-hydroxyfunktionalisierte Oligoester aber genau eine Art von Säuregruppen; das heißt jede alpha,omega-hydroxyfunktionalisierte Oligoesterspezies, egal ob sie nun eine oder mehrere Säuregruppen trägt, besitzt dieselbe Art von Säuregruppen.

Bezogen auf ein Gramm des erfindungsgemäß einzusetzenden alpha,omega-hydroxyfunktionalisierten Oligoesters enthält dieses bevorzugt 0,1 bis 1,2 mmol, besonders bevorzugt 0,2 bis 1,0 mmol und ganz besonders 0,5 bis 0,8 mmol an Säuregruppen.

Handelt es sich bei der besagten Säuregruppe um eine Sulfonsäuregruppe oder ein monosubstituiertes Sulfat, so wird die Stoffmenge der im alpha,omega-hydroxyfunktionalisierten Oligoester vorhandenen Säuregruppen mittels 1H-NMR bestimmt. Als deuteriertes Lösemittel wird dabei d6-DMSO und als Standard Tetramethylsilan eingesetzt.

Handelt es sich bei der besagten Säuregruppe um einen Phosphorsäuremonoester oder einen Phosphorsäurediester, so wird die Menge der im alpha,omega-hydroxyfunktionalisierten Oligoester vorhandenen Säuregruppen mittels 31 P-NMR bestimmt. Als deuteriertes Lösemittel wird d6-DMSO und Standard Triphenylphosphit eingesetzt.

Handelt es sich bei der besagten Säuregruppe um eine Carbonsäuregruppe, so kann die Stoffmenge der im alpha,omega-hydroxyfunktionalisierten Oligoester vorhandenen Carbonsäuregruppe mit Hilfe der Säurezahl angegeben werden. Diese liegt bevorzugt im Bereich von 5 bis 70 mg KOH/g, besonders bevorzugt 10 bis 60 mg KOH/g und ganz besonders bevorzugt 30 bis 50 mg KOH/g. Die Bestimmung der Säurezahl erfolgt gemäß DIN 53402. Dabei werden die in der Probe enthaltenden freien Säuren mit einer Kaliumhydroxid-Standardlösung in Anwesenheit eines Farbindikators titriert. Die Säurezahl entspricht der Masse an Kaliumhydroxid in mg, die zur Neutralisation von 1 g des alpha,omega-hydroxyfunktionalisierten Oligoesters unter festgelegten Bedingungen erforderlich ist.

In einer bevorzugten Ausführungsform ist der alpha,omega-hydroxyfunktionalisierte Oligoester herstellbar durch die Reaktion

(i) mindestens eines alpha,omega-hydroxyfunktionalisierten Oligoesters (I), welcher eine OH-Zahl von 30 bis 170 mg KOH/g, einen theoretischen Kohlenstoff-Kohlenstoff-Doppelbindungsgehalt von 1 bis 2,5 mmol/g, ein zahlenmittleres Molekulargewicht von 800 bis 2200 g/mol und ein massengewichtetes Molekulargewicht von 1000 bis 6000 g/mol besitzt,

(ii) mit mindestens einem cyclischen Dicarbonsäureanhydrid der Strukturformel (I)

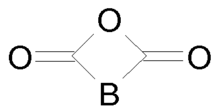

wobei es sich bei B um einen aliphatischen oder aromatischen Rest handelt, welcher mindestens eine Säuregruppe enthält,
mit der Maßgabe, dass die aus der Öffnung der Dicarbonsäureanhydridgruppe des cyclischen Dicarbonsäureanhydrids der Strukturformel (I) resultierenden Carbonsäuregruppen vollständig mit dem alpha,omega-hydroxyfunktionalisierten Oligoester (I) unter Ausbildung jeweils einer Esterbindung umgesetzt werden, und

(iii) die mindestens eine Säuregruppe teilweise oder vollständig versalzt wird.

Unter der oben bezeichneten vollständigen Umsetzung ist insbesondere zu verstehen, dass mehr als 95 mol-%, bevorzugt mehr als 99 mol-% und besonders bevorzugt mehr als 99,5 mol-% der in den Anhydridgruppen formal enthaltenen Carbonsäuregruppen unter Ausbildung jeweils einer Esterbindung reagiert haben.

Was unter teilweiser beziehungsweise vollständiger Versalzung zu verstehen ist, wurde oben bereits im Zusammenhang mit der allgemeinen Beschreibung des erfindungsgemäß einzusetzenden alpha,omega-hydroxyfunktionalisierten Oligoesters erörtert.

Bei der mindestens einen Säuregruppe handelt es sich bevorzugt um eine Carbonsäuregruppe, eine Sulfonsäuregruppe, einen Phosphorsäuremonoester, einen Phosphorsäurediester oder monosubstituierte Sulfate. Bevorzugt handelt es sich um eine Carbonsäure- oder Sulfonsäuregruppe. Ganz besonders bevorzugt handelt es sich um eine Carbonsäuregruppe.

**Beschreibung des alpha,omega-hydroxyfunktionalisierten Oligoesters (I)**

Der Begriff alpha,omega-hydroxyfunktionalisierter Oligoester (I) bezeichnet einen Oligoester, an dessen entgegengesetzten Enden, welche mit alpha beziehungsweise omega bezeichnet werden, sich jeweils eine Hydroxylgruppe befindet. Hierunter ist zu verstehen, dass ein solcher Oligoester an beiden Enden durch jeweils eine Monomereinheit terminiert ist, welche jeweils genau eine Hydroxylgruppe trägt. Handelt es sich um einen verzweigten Oligoester, so bezeichnen alpha und omega die Enden der längsten Polymerkette im Monomer. Die Länge bemisst sich dabei an der Anzahl der eingebauten Monomere. Es ist weiterhin nicht ausgeschlossen, dass der besagte alpha,omega-hydroxyfunktionalisierte Oligoester (I) weitere Hydroxylgruppen besitzt. Es ist grundsätzlich bevorzugt, dass der erfindungsgemäß einzusetzende alpha,omega-hydroxyfunktionalisierte Oligoester (I) genau zwei Hydroxylgruppen also jeweils eine in alpha- und eine in omega-Position besitzt. Es ist besonders bevorzugt, dass der erfindungsgemäß einzusetzende alpha,omega-hydroxyfunktionalisierte Oligoester (I) genau zwei Hydroxylgruppen jeweils eine in alpha- und eine in omega-Position besitzt und zudem linear ist.

Es sei noch einmal klargestellt, dass der alpha,omega-hydroxyfunktionalisierte Oligoester (I) von dem erfindungsgemäß einzusetzenden alpha,omega-hydroxyfunktionalisierten Oligoester zu unterscheiden ist. Wie oben bereits erläutert stellt der alpha,omega-hydroxyfunktionalisierte Oligoester (I) ein bevorzugtes Edukt bei der Herstellung des erfindungsgemäß einzusetzenden alpha,omega-hydroxyfunktionalisierten Oligoesters dar.

Der alpha,omega-hydroxyfunktionalisierte Oligoester (I) besitzt bevorzugt ein OH-Zahl von 70 bis 160 mg KOH/g und besonders bevorzugt von 130 bis 160 mg KOH/g sowie eine Säurezahl von bevorzugt 0 bis 10 mg KOH/g, besonders bevorzugt 0 bis 5 mg KOH/g und ganz besonders bevorzugt 0 bis 2 mg KOH/g. Die OH-Zahl und die Säurezahl werden wie oben bereits beschrieben nach DIN 53240 und DIN 53402 bestimmt.

Der alpha,omega-hydroxyfunktionalisierte Oligoester (I) besitzt weiterhin einen bevorzugten theoretischen Kohlenstoff-Kohlenstoff-Doppelbindungsgehalt von 1,5 bis 2 mmol/g und ganz besonders bevorzugt von 1,6 bis 1,9 mmol/g. Was unter einem theoretischen Kohlenstoff-Kohlenstoff-Doppelbindungsgehalt zu verstehen ist und wie dieser zu berechnen ist, wurde bereits weiter oben im Zusammenhang mit dem alpha,omega-hydroxyfunktionalisierte Oligoester beschrieben.

Der alpha,omega-hydroxyfunktionalisierte Oligoester (I) besitzt weiterhin ein bevorzugtes zahlenmittleres Molekulargewicht von 1000 bis 2000 g/mol und besonders bevorzugt von 1200 bis 1800 g/mol sowie ein gewichtsmittleres Molekulargewicht von bevorzugt 2000 bis 5000 g/mol und besonders bevorzugt 2800 bis 4000 g/mol. Die Bestimmung des zahlenmittleren und des gewichtsmittleren Molekulargewichts erfolgt mittels Gelpermeationschromatographie mit Tetrahydrofuran als Elutionsmittel und unter Verwendung eines Polystyrol-Standards. Das Säulenmaterial besteht aus Styrol-Divinylbenzol-Copolymeren.

Der alpha,omega-hydroxyfunktionalisierte Oligoester (I) lässt sich beispielsweise aus der Reaktion von Polycarbonsäuren mit Polyolen darstellen. Bevorzugt wird er aus Reaktion von Dicarbonsäuren sowie deren Anhydriden und Diolen, Triolen sowie monohydroxyfunktionellen Verbindungen hergestellt. Bevorzugt werden Diole eingesetzt.

Erfolgt die Herstellung des alpha,omega-hydroxyfunktionalisierten Oligoesters (I) mit Dicarbonsäuren, so können grundsätzlich auch deren Anhydride eingesetzt werden. Im Folgenden ist der Begriff Dicarbonsäure daher so zu verstehen, dass ebenfalls das korrespondierende Anhydrid eingeschlossen ist. Es gehört zum allgemeinen Wissen des Durchschnittsfachmanns zu entscheiden, die entsprechenden Verbindungen entweder als Dicarbonsäure oder als Anhydrid einzusetzen.

Es sei ferner darauf hingewiesen, dass die hier bezeichneten Dicarbonsäuren sowie deren Anhydride keine weiteren Säuregruppen der oben genannten Art, also Carbonsäuregruppen, Sulfonsäuregruppen, Phosphorsäuremonoester, Phosphorsäurediester oder monosubstituierte Sulfate, enthalten. Sie sind somit in jedem Fall verschieden von dem cyclischen Dicarbonsäureanhydrid der Strukturformel (I).

**Dicarbonsäuren**

Bei den erfindungsgemäß einzusetzenden Dicarbonsäuren kann es sich um aromatische oder aliphatische Verbindungen handeln. Bei aliphatischen Verbindungen handelt es sich um solche, die keine aromatischen Gruppen, wie beispielsweise einen Benzolrest enthalten. Als aromatische Verbindung im Sinne der vorliegenden Verbindung werden all jene verstanden, die mindestens eine aromatische Gruppe, wie beispielsweise einen Benzolrest enthalten. Als Beispiel für eine aromatische Verbindung seien beispielsweise die dem Fachmann bekannten Konstitutionsisomere der Benzoldicarbonsäure sowie Terephthalsäureanhydrid genannt.

Bevorzugt sind aliphatische Dicarbonsäuren. Besonders bevorzugt sind die besagten aliphatischen Dicarbonsäuren gesättigt oder einfach oder mehrfach ungesättigt. Ganz besonders bevorzugt handelt es sich um lineare aliphatische Dicarbonsäuren, die entweder gesättigt oder einfach oder mehrfach ungesättigt sind. Daneben können auch cycloaliphatische Dicarbonsäuren eingesetzt werden.

Es ist weiterhin bevorzugt, dass mindestens eine gesättigte und mindestens eine einfach oder mehrfach ungesättigte aliphatische Dicarbonsäure eingesetzt werden.

Besonders bevorzugt werden mindestens eine gesättigte lineare aliphatische Dicarbonsäure und mindestens eine einfach oder mehrfach ungesättigte lineare aliphatische Dicarbonsäure eingesetzt.

Besonders bevorzugt werden genau eine gesättigte und genau eine einfach oder mehrfach ungesättigte aliphatische Dicarbonsäure eingesetzt. Ganz besonders bevorzugt werden genau eine gesättigte lineare und genau eine einfach oder mehrfach ungesättigte lineare aliphatische Dicarbonsäure eingesetzt.

Bevorzugt beträgt das molare Verhältnis von gesättigten zu einfach und/oder mehrfach ungesättigten aliphatischen Dicarbonsäuren 0,5 : 1,5 bis 1,5 : 0,5, besonders bevorzugt 0,75 : 1,25 bis 1,25 : 0,75 und ganz besonders bevorzugt 0,9 : 1,1 bis 1,1 : 0,9. Die genannten Verhältnisse beziehen sich sowohl auf den Fall, dass mehr als eine gesättigte und/oder mehr als eine ungesättigte Dicarbonsäure eingesetzt werden, als auch auf den Fall, dass genau eine gesättigte und genau eine ungesättigte Dicarbonsäure eingesetzt werden.

Als gesättigte aliphatische Dicarbonsäuren werden bevorzugt solche mit 4 bis 18, besonders bevorzugt 6 bis 14 und ganz besonders bevorzugt 6 bis 10 Kohlenstoffatomen eingesetzt. Besonders bevorzugt handelt es sich hierbei um lineare gesättigte aliphatische Dicarbonsäuren.

Als einfach ungesättigte aliphatische Dicarbonsäuren werden bevorzugt solche mit 4 bis 10, besonders bevorzugt 4 bis 8 und ganz besonders bevorzugt 4 bis 6 Kohlenstoffatomen eingesetzt. Besonders bevorzugt handelt es sich hier um entsprechende ungesättigte lineare aliphatische Dicarbonsäuren.

Als mehrfach ungesättigte aliphatische Dicarbonsäuren werden bevorzugt solche mit 6 bis 18, besonders bevorzugt 8 bis 16 und ganz besonders bevorzugt 10 bis 14 Kohlenstoffatomen eingesetzt. Besonders bevorzugt handelt es sich hier um entsprechende ungesättigte lineare aliphatische Dicarbonsäuren.

Beispielsweise handelt es sich bei den gesättigten aliphatischen Dicarbonsäuren um Alkandisäuren. Bevorzugt werden gesättigte Alkandisäuren eingesetzt, welche 4 bis 18, besonders bevorzugt 6 bis 14 und ganz besonders bevorzugt 6 bis 10 Kohlenstoffatome enthalten. Bevorzugt handelt es sich hier um entsprechende gesättigte lineare Alkandisäuren. Geeignete Alkandisäuren sind zum Beispiel Bernsteinsäure, Glutarsäure, Adipinsäure, Pimelinsäure, Korksäure, Azelainsäure, Sebacinsäure, Undecandisäure, Dodecandisäure, Tridecandisäure, Tetradecandisäure und Hexadecandisäure sowie deren Anhydride, insoweit diese existieren.

Als einfach ungesättigte aliphatische Dicarbonsäuren können Alkendisäuren eingesetzt werden, welche 4 bis 10, besonders bevorzugt 4 bis 8 und ganz besonders bevorzugt 4 bis 6 Kohlenstoffatome enthalten. Eine geeignete einfach ungesättigte lineare Alkendisäuren ist beispielsweise Maleinsäure.

**Diole**

Bei den bevorzugt einzusetzenden Diolen kann es sich um aromatische oder aliphatische Verbindungen handeln. Bevorzugt sind aliphatische Diole. Besonders bevorzugt handelt es sich um lineare oder cyclische aliphatische Diole. Diese können sowohl gesättigt als auch einfach oder mehrfach ungesättigt sein. Bevorzugt handelt es sich um gesättigte lineare oder gesättigte cycloaliphatische Diole.

Es können beispielsweise gesättigte aliphatische Diole mit 4 bis 18, besonders bevorzugt 6 bis 14 und ganz besonders bevorzugt 6 bis 10 Kohlenstoffatomen eingesetzt werden. Bevorzugt handelt es sich hierbei um entsprechende gesättigte lineare oder gesättigte cycloaliphatische Diole.

Bevorzugt werden gesättigte Alkandiole oder gesättigte Cycloalkandiole eingesetzt. Bei letztgenannten kann es sich um Monocycloalkandiole, Bicycloalkandiole oder Tricycloalkandiole handeln.

Es können beispielsweise gesättigte Alkandiole mit 4 bis 18, besonders bevorzugt 6 bis 14 und ganz besonders bevorzugt 6 bis 10 Kohlenstoffatomen eingesetzt werden. Bevorzugt handelt es sich hier um entsprechende gesättigte lineare Alkandiole. Geeignete gesättigte Alkandiole sind zum Beispiel 1,4-Butandiol und 1,6-Hexandiol.

Ebenso können beispielsweise gesättigte cyclische aliphatische Diole mit 6 bis 18, besonders bevorzugt 6 bis 14 und ganz besonders bevorzugt 6 bis 10 Kohlenstoffatomen eingesetzt werden.

Es können bevorzugt gesättigte Cycloalkandiole mit 6 bis 18, besonders bevorzugt 6 bis 14 und ganz besonders bevorzugt 6 bis 10 Kohlenstoffatomen eingesetzt werden. Ganz besonders bevorzugt einzusetzende gesättigte Cyclolakandiole sind Tricyclodecandiol, Cyclohexyldimethanol und Tetramethylcyclobutandiol.

Es ist weiterhin bevorzugt, dass mindestens ein lineares aliphatisches Diol eingesetzt wird. Es ist ebenfalls bevorzugt, dass mindestens ein lineares aliphatisches Diol und mindestens ein cyclisches aliphatisches Diol eingesetzt werden. Das molare Verhältnis zwischen den linearen aliphatischen und den cyclischen aliphatischen Diolen beträgt dann bevorzugt 0,5 : 1,5 bis 1,5 : 0,5, besonders bevorzugt 0,75 : 1,25 bis 1,25 : 0,75 und ganz besonders bevorzugt 0,9 : 1,1 bis 1,1 : 0,9.

Zur Herstellung des alpha,omega-hydroxyfunktionalisierten Oligoesters (I) wird ein Überschuss an Diolen eingesetzt. Das molare Verhältnis von Dicarbonsäuren zu den Diolen ist dann beispielsweise n : (n + 1,1) bis n : (n + 2), bevorzugt n : (n + 1,2) bis n : (n + 1,8), besonders bevorzugt n : (n + 1,3) bis n : (n + 1,6) und ganz besonders bevorzugt n : (n + 1,3) bis n : (n + 1,5), wobei n die Stoffmenge der Dicarbonsäure bezeichnet.

Die Herstellung des alpha,omega-hydroxyfunktionalisierten Oligoesters (I) erfolgt in einer dem Fachmann geläufigen Art und Weise. Um eine quantitative Umsetzung der eingesetzten Edukte zu erzielen, muss das bei der Reaktion entstehende Wasser aus dem chemischen Gleichgewicht entzogen werden. Dies geschieht vornehmlich durch den Einsatz eines Wasserabscheiders. Der alpha,omega-hydroxyfunktionalisierte Oligoester (I) ist folglich ein Polykondensationsprodukt. Demnach handelt es sich bei dem alpha,omega-hydroxyfunktionalisierten Oligoester (I) um ein Gemisch aus entsprechenden Oligoestern unterschiedlicher Kettenlänge. Wird ein Überschuss an Diol eingesetzt, so enthält das besagte Gemisch zwangsläufig auch nicht umgesetztes Diol.

In einer bevorzugten Ausführungsform des erfindungsgemäß einzusetzenden alpha,omega-hydroxyfunktionalisierten Oligoesters werden zu dessen Herstellung mindestens eine gesättigte lineare aliphatische Dicarbonsäure, mindestens eine einfach ungesättigte lineare aliphatische Dicarbonsäure und mindestens ein gesättigtes aliphatisches Diol eingesetzt. In einer anderen ebenfalls bevorzugten Ausführungsform des erfindungsgemäß einzusetzenden alpha,omega-hydroxyfunktionalisierten Oligoesters werden zu dessen Herstellung mindestens eine gesättigte lineare aliphatische Dicarbonsäure, mindestens eine gesättigte cycloaliphatische Dicarbonsäure, mindestens eine einfach ungesättigte lineare aliphatische Dicarbonsäure und mindestens ein gesättigtes aliphatisches Diol eingesetzt. Bevorzugt handelt es sich bei der einzusetzenden gesättigten linearen aliphatischen Dicarbonsäure um eine lineare Alkandisäure mit 4 bis 18, besonders bevorzugt 6 bis 14 und ganz besonders bevorzugt 6 bis 10 Kohlenstoffatomen. Bei der einfach ungesättigten linearen Dicarbonsäure handelt es sich bevorzugt um eine einfach ungesättigte lineare Alkendisäure mit 4 bis 10, besonders bevorzugt 4 bis 8 und ganz besonders bevorzugt 4 bis 6 Kohlenstoffatomen. Bei dem gesättigten aliphatischen Diol handelt es sich bevorzugt um gesättigte lineare Alkandiole mit 4 bis 18, besonders bevorzugt 6 bis 14 und ganz besonders bevorzugt 6 bis 10 Kohlenstoffatomen. Bei dem gesättigten cycloaliphatischen Diol handelt es sich bevorzugt um gesättigte Cycloalkandiole mit 6 bis 18, besonders bevorzugt 6 bis 14 und ganz besonders bevorzugt 6 bis 10 Kohlenstoffatomen. Im Sinne dieser beiden bevorzugten Ausführungsformen sind ferner die oben angegebenen molaren Verhältnisse von gesättigten zu einfach und/oder mehrfach ungesättigten aliphatischen Dicarbonsäuren bevorzugt, besonders bevorzugt und ganz besonders bevorzugt. Selbiges gilt für die oben angegebenen molaren Verhältnisse zwischen dem linearen aliphatischen und dem cycloaliphatischen Diol.

Darüber hinaus lassen sich bei der Herstellung des alpha,omega-hydroxyfunktionalisierten Oligoesters (I) natürlich auch Triole und monohydroxyfunktionelle Verbindungen einsetzen. Beispielsweise können aliphatische Triole sowie aliphatische monohydroxyfunktionelle Verbindungen eingesetzt werden. Bevorzugt handelt es sich dabei um entsprechende aliphatische Kohlenwasserstoffverbindungen.

Als Beispiel für ein Triol sei Trimethylolpropan genannt. Als monohydroxyfunktionelle Verbindungen kann beispielsweise Dodecanol eingesetzt werden.

Zur Herstellung des erfindungsgemäß einzusetzenden alpha,omega-hydroxyfunktionalisierten Oligoesters wird in der oben bezeichneten bevorzugten Ausführungsform mindestens ein alpha,omega-hydroxyfunktionalisierter Oligoester (I) mit mindestens einem cyclischen Dicarbonsäureanhydrid der Strukturformel (I)

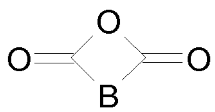

zur Reaktion gebracht, wobei es sich bei B um einen aliphatischen, cycloaliphatischen oder aromatischen Rest handelt, welcher mindestens eine Säuregruppe enthält. Diese Säuregruppe ist bevorzugt ausgewählt aus der oben bereits im Zusammenhang mit der allgemeinen Beschreibung des alpha,omega-hydroxyfunktionalisierten Oligoesters bereits offenbarten Gruppe bestehend aus Carbonsäure, Sulfonsäure, Phosphorsäuremonoester, Phosphorsäurediester oder monosubstituiertem Sulfat. Bei dem cyclischen Dicarbonsäureanhydrid der Strukturformel (I) befinden sich die beiden Carbonsäuregruppen, aus denen das Anhydrid gebildet wurde bevorzugt jeweils in alpha-Stellung zueinander. Dies sei anhand der folgenden Strukturformel veranschaulicht:

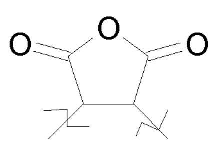

Besonders bevorzugt handelt es sich bei B um einen aromatischen und ganz besonders bevorzugt um einen Benzolrest. Es ist ebenfalls bevorzugt, dass B nur genau eine Säuregruppe enthält. Dabei handelt es sich bevorzugt um eine Carbonsäuregruppe oder eine Sulfonsäuregruppe. Als cyclisches Dicarbonsäureanhydrid der Strukturformel (I) wird bevorzugt Trimellithsäureanhydrid oder Sulfoisophthalsäureanhydrid eingesetzt.

Bezogen auf die Gesamtstoffmenge der zu Herstellung des erfindungsgemäß einzusetzenden alpha,omega-hydroxyfunktionalisierten Oligoesters zu verwendenden Polycarbonsäuren, Polyolen und dem besagten mindestens einen cyclischen Dicarbonsäureanhydrid der Strukturformel (I) werden bevorzugt 2 bis 10 mol.-%, besonders bevorzugt 3 bis 9 mol.-% und ganz besonders bevorzugt 4 bis 7 mol.-% des besagten cyclischen Dicarbonsäureanhydrids der Strukturformel (I) eingesetzt.

Der alpha,omega-hydroxyfunktionalisierte Oligoesters (I) kann wie oben bereits beschrieben in einem weiteren Reaktionsschritt zum erfindungsgemäß einzusetzenden alpha,omega-hydroxyfunktionalisierten Oligoester umgesetzt werden. Die Reaktionsbedingungen werden so gewählt, dass die beiden in der Anhydridgruppe des cyclischen Dicarbonsäureanhydrids der Strukturformel (I) formal enthaltenen Carbonsäuregruppen vollständig mit dem alpha,omega-hydroxyfunktionalisierten Oligoester (I) unter Ausbildung jeweils einer Esterbindung umgesetzt werden. Es findet zudem keine Veresterung der mindestens einen Säuregruppe des Restes B mit dem alpha,omega-hydroxyfunktionalisierten Oligoester (I) statt. Hierunter ist zu verstehen, dass weniger als 5 mol.-%, bevorzugt weniger als 1 mol.-%, besonders bevorzugt weniger als 0,5 mol.-% und ganz besonders bevorzugt weniger als 0,1 mol.-% der besagten Säuregruppen verestert werden. So sollte beispielsweise die Reaktionstemperatur 160 °C nicht überschreiten, weil ansonsten auch die weniger reaktiven Säuregruppen des Restes B quantitativ mit den Hydroxylgruppen des alpha,omega-hydroxyfunktionalisierten Oligoesters (I) umgesetzt würden.

In einer weiteren bevorzugten Ausführungsform besitzt der alpha,omega-hydroxyfunktionalisierte Oligoester die Strukturformel (II):

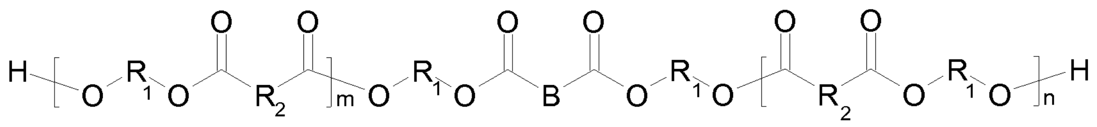

(II)

wobei

- die (m + n + 2) Reste $R_1$ unabhängig voneinander ausgewählt sind aus der Gruppe der linearen oder cyclischen Alkylenreste,
- die (m + n) Reste $R_2$ unabhängig voneinander ausgewählt sind aus der Gruppe der Alkylen- und Alkenylenreste, wobei das Verhältnis von Alkylen zu Alkenylenresten gerade so gewählt ist, dass der besagte alpha,omega-hydroxyfunktionalisierte Oligoester der Strukturformel (II) einen theoretischen Kohlenstoff-Kohlenstoff-Doppelbindungsgehalt von 0,5 bis 2,5 mmol/g besitzt,
- die Indizes m und n so gewählt sind, dass das zahlenmittlere Molekulargewicht des besagten alpha,omega-hydroxyfunktionalisierten Oligoesters der Strukturformel (II) 2500 bis 6000 g/mol beträgt
- es sich bei dem Rest B um einen aliphatischen oder aromatischen Rest handelt, welcher mindestens eine Säuregruppe enthält, welche teilweise oder vollständig versalzt ist.

Was unter teilweiser beziehungsweise vollständiger Versalzung zu verstehen ist, wurde oben bereits im Zusammenhang mit der allgemeinen Beschreibung des erfindungsgemäß einzusetzenden alpha,omega-hydroxyfunktionalisierten Oligoesters erörtert.

Bei den Indizes m und n handelt es sich jeweils um eine ganze Zahl, welche auch Null sein kann. Die Voraussetzung, dass die Indizes m und n so gewählt sind, dass das zahlenmittlere Molekulargewicht des besagten alpha,omega-hydroxyfunktionalisierten Oligoesters der Strukturformel (II) 2500 bis 6000 g/mol beträgt sei im Folgenden erklärt. Es soll angenommen werden, dass es sich bei allen (m + n + 2) Resten $R_1$ um einen Hexamethylenrest und bei der Hälfte aller (m + n) Reste $R_2$ jeweils um einen Tetramethylenrest und bei der anderen Hälfte jeweils um einen Rest der Formel $-CH=CH-$ handelt. Ferner sei angenommen, dass es sich bei A um einen Benzolrest handelt, welcher in 4-Position eine Carbonsäure enthält. Zudem sind alle Carbonsäure mit genau einem Äquivalent DMAE vollständig versalzt. Beträgt das zahlenmittlere Molekulargewicht beispielsweise 3600 g/mol, so liegt m + n dann im Mittel zwischen 14 und 15.

Das zahlenmittlere Molekulargewicht des alpha,omega-hydroxyfunktionalisierten Oligoesters der Strukturformel (II) liegt bevorzugt im Bereich von 3200 bis 5000 g/mol und ganz besonders bevorzugt im Bereich von 3500 bis 4500 g/mol liegt. Ferner liegt das gewichtsmittlere Molekulargewicht des alpha,omega-hydroxyfunktionalisierten Oligoesters der Strukturformel (II) bevorzugt im Bereich von 15000 bis 28000 g/mol und besonders bevorzugt im Bereich von 20000 bis 26000.

Der alpha,omega-hydroxyfunktionalisierte Oligoester der Strukturformel (II) besitzt bevorzugt eine OH-Zahl von 35 bis 85 mg KOH/g und ganz besonders bevorzugt von 45 bis 65 mg KOH/g.

Ferner besitzt der alpha,omega-hydroxyfunktionalisierte Oligoester der Strukturformel (II) bevorzugt einen theoretischen Kohlenstoff-Kohlenstoff-Doppelbindungsgehalt von 1 bis 2 mmol/g und ganz besonders bevorzugt von 1,2

bis 1,8 mmol/g.

In einer bevorzugten Ausführungsform des alpha,omega-hydroxyfunktionalisierten Oligoesters der Strukturformel (II) sind entweder m oder n gleich 0.

Bevorzugt enthält alpha,omega-hydroxyfunktionalisierte Oligoester der Strukturformel (II) genau eine Säuregruppe. In diesem Fall ist folglich K = 1.

Bei $R_1$ handelte es sich um eine linearen oder cyclischen Alkylenrest. Im Fall eines linearen Alkylenrestes enthält dieser beispielsweise 4 bis 18, besonders bevorzugt 6 bis 14 und ganz besonders bevorzugt 6 bis 10 Kohlenstoffatome. Ganz besonders bevorzugt handelt es sich hier um einen Hexamethylenrest. Im Falle eines cyclischen Alkylenrests enthält dieser beispielsweise 6 bis 18, besonders bevorzugt 6 bis 14 und ganz besonders bevorzugt 6 bis 10 Kohlenstoffatome. Ganz besonders bevorzugt handelt es sich hier um einen Tricyclodecanrest.

In dem alpha,omega-hydroxyfunktionalisierten Oligoester der Strukturformel (II) kann genau eine Art von Resten $R_1$, also entweder lineare oder cyclische Alkylenreste, vorhanden sein. Es ist ebenfalls bevorzugt, dass genau zwei Arten von Resten $R_1$, nämlich lineare Alkylenreste und cyclische Alkylenreste vorhanden sind. Das molare Verhältnis zwischen den linearen und den cyclischen Alkylenresten beträgt dann bevorzugt 0,5 : 1,5 bis 1,5 : 0,5, besonders bevorzugt 0,75 : 1,25 bis 1,25 0,75 und ganz besonders bevorzugt 0,9 : 1,1 bis 1,1 : 0,9.

Ist mehr als eine Art von Resten $R_1$ im alpha,omega-hydroxyfunktionalisierten Oligoester der Strukturformel (II) vorhanden, so ist deren Anordnung im Oligomer statistisch.

Bei $R_2$ handelt es sich entweder um einen Alkylen- oder einen Alkenylenrest. Dabei ist es bevorzugt, dass das molare Verhältnis zwischen Alkylen- und Alkenylenresten 0,5 : 1,5 bis 1,5 : 0,5, besonders bevorzugt 0,75 : 1,25 bis 1,25 : 0,75 und ganz besonders bevorzugt 0,9 : 1,1 bis 1,1 : 0,9 beträgt.

Ist $R_2$ ein Alkylenrest, so ist dieser bevorzugt linear und enthält bevorzugt 2 bis 16, besonders bevorzugt 4 bis 12 uns ganz besonders bevorzugt 4 bis 8 Kohlenstoffatome. Ebenfalls ganz besonders bevorzugt handelt es sich um einen Tetramethylenrest.

$R_2$ kann weiterhin ein Alkenylenrest sein. Im Fall eines einfach ungesättigten Alkenylenrests ist dieser bevorzugt linear und enthält 2 bis 8, besonders bevorzugt 2 bis 6 und ganz besonders bevorzugt 2 bis 4 Kohlenstoffatome. Ganz besonders bevorzugt handelt es sich um einen Alkenylenrest der Struktur -CH=CH-.

Ist mehr als eine Art von Resten $R_2$ im alpha,omega-hydroxyfunktionalisierten Oligoester der Strukturformel (II) vorhanden, so ist deren Anordnung im Oligomer statistisch.

Bei dem Rest B im alpha,omega-hydroxyfunktionalisierten Oligoester der Strukturformel (II) handelt es sich bevorzugt um einen Rest

$$A(Q)_K,$$

wobei

- A ein aliphatischer oder aromatischer Rest ist,
- es sich bei dem Rest Q um eine teilweise oder vollständig versalzte Säuregruppe handelt, und
- K = 1 bis 3 beträgt.

Bevorzugt handelt es sich bei Q um eine teilweise oder vollständig versalzte Carbonsäure- oder Sulfonsäure. Ebenfalls bevorzugt handelt es sich bei A um einen Alkylenrest, einen cyclischen Alkylenrest oder einen aromatischen Rest.

Besonders bevorzugt handelt es sich bei A um einen Benzolrest, bei dem sich die beiden Carbonsäureestergruppen jeweils in alpha-Stellung zueinander befinden, wobei zudem gilt K = 1. Besonders bevorzugt handelte es sich bei Q zudem um eine teilweise oder vollständig versalzte Carbonsäuregruppe. Was darunter zu verstehen ist, dass sich die beiden Carbonsäureestergruppen jeweils in alpha-Stellung zueinander befinden ist in der folgenden Strukturformel veranschaulicht:

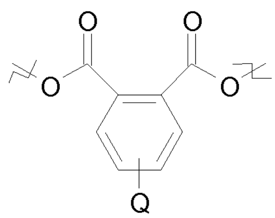

Besonders bevorzugte Ausführungsformen des erfindungsgemäß einzusetzenden alpha,omega-hydroxyfunktionalisierten Oligoesters der Strukturformel (II) werden im Folgenden genannt:

a) In einer besonders bevorzugten Ausführungsform des alpha,omega-hydroxyfunktionalisierten Oligoesters der Strukturformel (II) besitzt dieser ein zahlenmittleres Molekulargewicht von 3500 bis 4500 g/mol.

b) In einer weiteren besonders bevorzugten Ausführungsform des alpha,omega-hydroxyfunktionalisierten Oligoesters der Strukturformel (II) besitzt dieser ein gewichtsmittleres Molekulargewicht von 20000 bis 26000 g/mol.

c) In einer weiteren besonders bevorzugten Ausführungsform des alpha,omega-hydroxyfunktionalisierten Oligoesters der Strukturformel (II) besitzt dieser eine OH-Zahl von 45 bis 65 mg KOH/g.

d) In einer weiteren besonders bevorzugten Ausführungsform des alpha,omega-hydroxyfunktionalisierten Oligoesters der Strukturformel (II) besitzt dieser einen theoretischen Kohlenstoff-Kohlenstoff-Doppelbindungsgehalt von 1 bis 2 mmol/g.

e) In einer weiteren besonders bevorzugten Ausführungsform des alpha,omega-hydroxyfunktionalisierten Oligoesters der Strukturformel (II) sind die (m + n) Reste $R_2$ ausgewählt aus der Gruppe der linearen Alkylenreste mit 4 bis 8 Kohlenstoffatomen und aus der Gruppe der linearen Alkenylenreste mit 2 bis 4 Kohlenstoffatomen. Ganz besonders bevorzugt beträgt in diesem Fall das molare Verhältnis zwischen den linearen Alkylenresten und den linearen Alkenylenresten 0,9 : 1,1 bis 1,1 : 0,9.

f) In einer weiteren besonders bevorzugten Ausführungsform des alpha,omega-hydroxyfunktionalisierten Oligoesters der Strukturformel (II) sind die (m + n + 2) Reste $R_1$ ausgewählt aus der Gruppe der linearen Alkylenreste mit 6 bis 10 Kohlenstoffatomen. Es ist ebenfalls möglich, dass die (m + n + 2) Reste $R_1$ ausgewählt sind aus der Gruppe der linearen Alkylenreste mit 6 bis 10 Kohlenstoffatomen sowie aus der Gruppe der cyclische Alkylenreste mit 6 bis 10 Kohlenstoffatomen. Ganz besonders bevorzugt beträgt in diesem Fall das molare Verhältnis zwischen linearen und cyclischen Alkylenresten 0,9 : 1,1 bis 1,1 : 0,9.

g) In einer weiteren besonders bevorzugten Ausführungsform des alpha,omega-hydroxyfunktionalisierten Oligoesters der Strukturformel (II) handelt es sich bei dem Rest B um einen wie oben definierten Rest $A(Q)_K$, wobei es sich bei A um einen Benzolrest handelt, bei dem sich die beiden Carbonsäureestergruppen jeweils in alpha-Stellung zueinander befinden und zudem K = 1 gilt.

In einer ganz besonders bevorzugten Ausführungsform des alpha,omega-hydroxyfunktionalisierten Oligoesters der Strukturformel (II) sind alle die unter a) bis g) angegeben Merkmale in Kombination realisiert.

Bei der Herstellung des alpha,omega-hydroxyfunktionalisierten Oligoesters (I) wird bevorzugt ein Überschuss an Diol eingesetzt, so dass das Reaktionsgemisch auch nicht umgesetztes Diol enthält. Bei der Umsetzung des alpha,omega-hydroxyfunktionalisierten Oligoesters (I) mit einem geeigneten cyclischen Dicarbonsäureanhydrid entstehen also im Wesentlichen drei unterschiedliche Arten von Produkten.

Produkt 1: alpha,omega-hydroxyfunktionalisierter Oligoester der Strukturformel (II), wobei sowohl m als auch n größer als Null sind.

Produkt 2: alpha,omega-hydroxyfunktionalisierter Oligoester der Strukturformel (II), wobei entweder m oder n Null beträgt. Die jeweils andere Variable nimmt einen Wert größer Null an.

Produkt 3: alpha,omega-hydroxyfunktionalisierter Oligoester der Strukturformel (II), wobei sowohl m als auch n beide Null sind.

Bevorzugt enthält das Reaktionsgemisch mindestens 60 %, besonders bevorzugt mindestens 70 % und ganz besonders bevorzugt mindesten 80 % des Produktes 2, wobei sich die prozentualen Angaben auf die Gesamtstoffmenge der Produkte 1 bis 3 beziehen.

**Pigmentierter wässriger Basislack**

Es ist erfindungswesentlich, dass der erfindungsgemäße pigmentierte wässrige Basislack den oben beschriebenen erfindungsgemäß einzusetzenden alpha,omega-hydroxyfunktionalisierten Oligoester in einer Menge von 0,5 bis 10 Gew.-% bezogen auf den Gesamtfestkörperanteil des pigmentierten wässrigen Basislacks enthält. Bevorzugt wird der erfindungsgemäß einzusetzende alpha,omega-hydroxyfunktionalisierte Oligoester in einer Menge von 1 bis 9 Gew.-%, besonders bevorzugt 1 bis 8 Gew.-% und ganz besonders bevorzugt 1,5 bis 7,5 Gew.-% eingesetzt. Wird die Untergrenze von 0,5 Gew.-% unterschritten, so wird die Haftung nicht verbessert. Wird die Obergrenze von 10 Gew.-% überschritten, so treten Nachteile wie beispielsweise eine Vergilbung der resultierenden Beschichtung auf.

In dem erfindungsgemäßen pigmentierten wässrigen Basislack beträgt die Summe über die gewichtsprozentualen Anteile aller alpha,omega-hydroxyfunktionalisierten Oligoester 0,5 bis 10 Gew.-% bezogen auf den Gesamtfestkörperanteil des pigmentierten wässrigen Basislacks. Für den Fall, dass bevorzugte Ausführungsformen der besagten alpha,omega-hydroxyfunktionalisierten Oligoesters eingesetzt werden, beträgt die Summe über die gewichtsprozentualen Anteile aller bevorzugten Ausführungsformen des besagten alpha,omega-hydroxyfunktionalisierten Oligoesters bevorzugt ebenfalls 0,5 bis 10 Gew.-% bezogen auf den Gesamtfestkörperanteil des pigmentierten wässrigen Basislacks. Besonders bevorzugt enthält der erfindungsgemäße pigmentierte wässrige Basislack als alpha,omega-hydroxyfunktionalisierten Oligoester ausschließlich bevorzugte Ausführungsformen der besagten alpha,omega-hydroxyfunktionalisierten Oligoester.

In einer bevorzugten Ausführungsform des erfindungsgemäßen pigmentierten wässrigen Basislacks beträgt die Summe über die gewichtsprozentualen Anteile aller alpha,omega-hydroxyfunktionalisierten Oligoester 1 bis 9 Gew.-% bezogen auf den Gesamtfestkörperanteil des pigmentierten wässrigen Basislacks. Für den Fall, dass bevorzugte Ausführungsformen der besagten alpha,omega-hydroxyfunktionalisierten Oligoester eingesetzt werden, beträgt die Summe über die gewichtsprozentualen Anteile aller bevorzugten Ausführungsformen des besagten alpha,omega-hydroxyfunktionalisierten Oligoesters bevorzugt ebenfalls 1 bis 9 Gew.-% bezogen auf den Gesamtfestkörperanteil des pigmentierten wässrigen Basislacks. Besonders bevorzugt enthält der erfindungsgemäße pigmentierte wässrige Basislack als alpha,omega-hydroxyfunktionalisierten Oligoester ausschließlich bevorzugte Ausführungsformen der besagten alpha,omega-hydroxyfunktionalisierten Oligoester. In einer besonders bevorzugten Ausführungsform des erfindungsgemäßen pigmentierten wässrigen Basislacks beträgt die Summe über die gewichtsprozentualen Anteile aller alpha,omega-hydroxyfunktionalisierten Oligoester 1 bis 8 Gew.-% bezogen auf den Gesamtfestkörperanteil des pigmentierten wässrigen Basislacks. Für den Fall, dass bevorzugte Ausführungsformen der besagten alpha,omega-hydroxyfunktionalisierten Oligoester eingesetzt werden, beträgt die Summe über die gewichtsprozentualen Anteile aller bevorzugten Ausführungsformen des besagten alpha,omega-hydroxyfunktionalisierten Oligoesters bevorzugt ebenfalls 1 bis 8 Gew.-% bezogen auf den Gesamtfestkörperanteil des pigmentierten wässrigen Basislacks. Besonders bevorzugt enthält der erfindungsgemäße pigmentierte wässrige Basislack als alpha,omega-hydroxyfunktionalisierten Oligoester ausschließlich bevorzugte Ausführungsformen der besagten alpha,omega-hydroxyfunktionalisierten Oligoester.

In einer ganz besonders bevorzugten Ausführungsform des erfindungsgemäßen pigmentierten wässrigen Basislacks beträgt die Summe über die gewichtsprozentualen Anteile aller alpha,omega-hydroxyfunktionalisierten Oligoester 1,5 bis 7,5 Gew.-% bezogen auf den Gesamtfestkörperanteil des pigmentierten wässrigen Basislacks. Für den Fall, dass bevorzugte Ausführungsformen der besagten alpha,omega-hydroxyfunktionalisierten Oligoester eingesetzt werden, beträgt die Summe über die gewichtsprozentualen Anteile aller bevorzugten Ausführungsformen des besagten alpha,omega-hydroxyfunktionalisierten Oligoesters bevorzugt ebenfalls 1,5 bis 7,5 Gew.-% bezogen auf den Gesamtfestkörperanteil des pigmentierten wässrigen Basislacks. Besonders bevorzugt enthält der erfindungsgemäße pigmentierte wässrige Basislack als alpha,omega-hydroxyfunktionalisierten Oligoester ausschließlich bevorzugte Ausführungsformen der besagten alpha,omega-hydroxyfunktionalisierten Oligoester.

Als Beispiel für in diesem Sinne bevorzugte Ausführungsformen des alpha,omega-hydroxyfunktionalisierten Oligoesters, sei der alpha,omega-hydroxyfunktionalisierte Oligoester gemäß Strukturformel (II) genannt.

Als weitere Beispiele für in diesem Sinne bevorzugte Ausführungsformen des erfindungsgemäßen alpha,omega-hydroxyfunktionalisierten Oligoesters seien die folgenden besonders bevorzugten Ausführungsformen genannt:

a) In einer besonders bevorzugten Ausführungsform des alpha,omega-hydroxyfunktionalisierten Oligoesters der Strukturformel (II) besitzt dieser ein zahlenmittleres Molekulargewicht von 3500 bis 4500 g/mol.

b) In einer weiteren besonders bevorzugten Ausführungsform des alpha,omega-hydroxyfunktionalisierten Oligoesters der Strukturformel (II) besitzt dieser ein gewichtsmittleres Molekulargewicht von 20000 bis 26000 g/mol.

c) In einer weiteren besonders bevorzugten Ausführungsform des alpha,omega-hydroxyfunktionalisierten Oligoesters der Strukturformel (II) besitzt dieser eine OH-Zahl von 45 bis 65 mg KOH/g.

d) In einer weiteren besonders bevorzugten Ausführungsform des alpha,omega-hydroxyfunktionalisierten Oligoesters der Strukturformel (II) besitzt dieser einen theoretischen Kohlenstoff-Kohlenstoff-Doppelbindungsgehalt von 1 bis 2 mmol/g.

e) In einer weiteren besonders bevorzugten Ausführungsform des alpha,omega-hydroxyfunktionalisierten Oligoesters der Strukturformel (II) sind die (m + n) Reste $R_2$ ausgewählt aus der Gruppe der linearen Alkylenreste mit 4 bis 8 Kohlenstoffatomen und aus der Gruppe der linearen Alkenylenreste mit 2 bis 4 Kohlenstoffatomen. Ganz besonders bevorzugt beträgt in diesem Fall das molare Verhältnis zwischen den linearen Alkylenresten und den linearen Alkenylenresten 0,9 : 1,1 bis 1,1 : 0,9.

f) In einer weiteren besonders bevorzugten Ausführungsform des alpha,omega-hydroxyfunktionalisierten Oligoesters der Strukturformel (II) sind die (m + n + 2) Reste $R_1$ ausgewählt aus der Gruppe der linearen Alkylenreste mit 6 bis 10 Kohlenstoffatomen. Es ist ebenfalls möglich, dass die (m + n + 2) Reste $R_1$ ausgewählt sind aus der Gruppe der linearen Alkylenreste mit 6 bis 10 Kohlenstoffatomen sowie aus der Gruppe der cyclische Alkylenreste mit 6 bis 10 Kohlenstoffatomen. Ganz besonders bevorzugt beträgt in diesem Fall das molare Verhältnis zwischen linearen und cyclischen Alkylenresten 0,9 : 1,1 bis 1,1 : 0,9.

g) In einer weiteren besonders bevorzugten Ausführungsform des alpha,omega-hydroxyfunktionalisierten Oligoesters der Strukturformel (II) handelt es sich bei dem Rest B um einen wie oben definierten Rest $A(Q)_K$, wobei es sich bei A um einen Benzolrest handelt, bei dem sich die beiden Carbonsäureestergruppen jeweils in alpha-Stellung zueinander befinden und zudem K = 1 gilt.

Als eine in diesem Sinne ebenfalls bevorzugte Ausführungsform des alpha,omega-hydroxyfunktionalisierten

Oligoesters sei jene genannt, welche alle die unter a) bis g) angegebenen Merkmale in Kombination realisiert.

Der Festkörpergehalt beziehungsweise den Gesamtfestkörperanteil des pigmentierten wässrigen Basislacks kann bestimmt werden, indem ca. 2 g Probe in eine vorher getrocknete Aluminiumschale eingewogen und 60 Minuten bei 125 °C im Trockenschrank getrocknet, im Exsikkator abgekühlt, und dann zurückgewogen werden. Der Rückstand bezogen auf die Gesamtmenge der eingesetzten Probe entspricht dem Festkörperanteil. Die Bestimmung des Festkörpers erfolgte nach EN ISO 3251 (1-2 g 1 h 125°C).

Der pigmentierte wässrige Basislack enthält mindestens ein organisches Polymer als Bindemittel. Diese organischen Polymere sind beispielsweise die dem Fachmann bekannten Polyurethan-, Polyester- und/oder Epoxidharze. Ebenfalls möglich ist der Einsatz von an sich bekannten Polyacrylat- und Polymethacrylatharzen (im Folgendem als Poly(meth)acrylatharze bezeichnet). Die genannten organischen Polymere als Bindemittel enthalten vorzugsweise zusätzlich unterschiedliche funktionelle Gruppen zur chemischen Vernetzung, wobei Hydroxygruppen bevorzugt sind. Bevorzugt werden Polyurethan-, Polyester- und/oder Poly(meth)acrylatharze, welche bevorzugt Hydroxygruppen enthalten, als Bindemittel eingesetzt. Solche organischen Polymere beziehungsweise Harze werden beispielsweise im Römpp-Lexikon Lacke und Druckfarben, Georg Thieme Verlag, Stuttgart, New York, 1998, Seiten 73 bis 74, beschrieben. Die Dispergierbarkeit der organischen Polymere beziehungsweise Harze in Wasser kann über die dem Fachmann geläufigen Maßnahmen erreicht werden. Dabei kann es sich um die ionische Modifizierung der organischen Polymere durch Einführung von Monomeren, die beispielsweise Carboxylat- oder Sulfonatgruppen enthalten, handeln. Möglich ist auch die nichtionische Modifizierung durch beispielsweise Polyglykoletherketten oder der Einsatz von bestimmten, weiter unten beschriebenen Additiven wie Dispergiermitteln, beispielsweise Emulgatoren.

Die organischen Polymere können physikalisch härtend oder chemisch härtend sein, das heißt chemisch vernetzend sein. Im letzteren Fall können die organischen Polymere selbst- und/oder fremdvernetzend sein. Dies heißt, dass die komplementären funktionellen Gruppen, die unter Härtungsbedingungen, beispielsweise Hitze, reagieren und damit einen vernetzten Beschichtungsfilm bilden, in ein und demselben organischen Polymer vorliegen können (selbstvernetzend). Möglich ist aber auch, dass die komplementären funktionellen Gruppen in unterschiedlichen Verbindungen vorliegen (fremdvernetzend).

Bei fremdvernetzenden Systemen sind beispielsweise neben den oben angeführten Harzsystemen zusätzlich vollveretherte und/oder teilveretherte Aminoplastharze, monomere und/oder polymere Polyamine sowie monomere und/oder polymere blockierte und/oder freie Polyisocyanate im wässrigen Beschichtungsmittel als Vernetzer enthalten. Im Rahmen der vorliegenden Erfindung werden bevorzugt vollveretherte und/oder teilveretherte Aminoplastharze, insbesondere bevorzugt vollveretherte und/oder teilveretherte Melamin-Formaldehyd-Harze eingesetzt.

Die Auswahl und Kombination von geeigneten organischen Polymeren und Monomeren, beispielsweise von geeigneten Polyurethan-, Polyester-, Poly(meth)acrylat- und/oder Epoxidharzen mit geeigneten funktionellen Gruppen, vorzugsweise Hydroxygruppen, und gegebenenfalls Aminoplastharzen, Polyaminen und/oder Polyisocyanaten erfolgt je nach den gewünschten und/oder erforderlichen Eigenschaften des herzustellenden Beschichtungssystems. Eine weiteres Auswahlkriterium sind die gewünschten und/oder erforderlichen Härtungsbedingungen, insbesondere die Härtungstemperaturen. Wie eine solche Auswahl zu treffen ist, ist dem Fachmann auf dem Gebiet der Lackiertechnik bekannt und kann von diesem entsprechend angepasst werden. Möglich sind dabei die an sich bekannten Ein-Komponenten sowie Zwei-Komponenten-Beschichtungssysteme (vergleiche hierzu auch Römpp-Lexikon Lacke und Druckfarben, Georg Thieme Verlag, Stuttgart, New York, 1998, Seiten 274-276, sowie Seiten 641-642). Bevorzugt kommen Ein-Komponenten Systeme zum Einsatz.

Besonders bevorzugt wird im Rahmen der vorliegenden Erfindung eine Kombination aus mindestens einem hydroxyfunktionellen Polyurethan-, Polyester- und/oder Poly(meth)acrylatharz als Bindemittel und mindestens einem vollveretherten und/oder teilveretherten Melamin-Formaldehyd-Harz als Vernetzer eingesetzt.

Vorteilhafterweise liegt der Anteil aller filmbildenden Komponenten, insbesondere des mindestens einen hydroxyfunktionellen Polyurethan-, Polyester- und/oder Poly(meth)acrylatharzes als Bindemittel und des mindestens einem vollveretherten und/oder teilveretherten Melamin-Formaldehyd-Harz als Vernetzers im Bereich von 10 bis 90 Gew.-%, insbesondere von 15 bis 60 Gew.-%, besonders bevorzugt im Bereich von 20 bis 50 Gew.-%, jeweils bezogen auf die Gesamtmenge des pigmentierten wässrigen Basislacks. Der Anteil eines jeweils separat betrachteten Harzes als Bindemittel sowie eines Vernetzers liegt vorteilhafterweise nicht unter 3 Gew.-%, bezogen auf die Gesamtmenge des wässrigen Beschichtungsmittels.

Des Weiteren enthält der pigmentierte wässrige Basislack mindestens ein übliches und bekanntes farbgebendes und/oder effektgebendes Pigment.

Beispiele für solche Pigmente sind Pigmente auf anorganischer Basis, wie beispielsweise Titandioxid, Eisenoxid und Ruß oder auch übliche Metallpigmente (beispielsweise handelsübliche Aluminiumbronzen, Edelstahlbronzen) und nichtmetallische Effektpigmente (beispielsweise Perlglanz- beziehungsweise Interferenzpigmente). Auch farbgebende Pigmente auf organischer Basis wie Azopigmente und Phthalocyaninpigmente können zum Einsatz kommen. Der Anteil von Pigmenten liegt beispielsweise im Bereich von 1 bis 20 Gew.-%, bevorzugt 2 bis 10 Gew.-%, jeweils bezogen auf die Gesamtmenge des pigmentierten wässrigen Basislacks. Die Auswahl von Art und einzusetzender Menge von Pigmenten erfolgt in der dem Fachmann geläufigen Art und Weise und richtet sich nach den erforderlichen beziehungsweise gewünschten Eigenschaften des Beschichtungsmittels. Ergänzend sei hierzu auf Römpp-Lexikon Lacke und Druckfarben, Georg Thieme Verlag, Stuttgart, New York, 1998, Seiten 451, verwiesen.

Des Weiteren kann der pigmentierte wässrige Basislack neben Wasser auch organische Lösemittel enthalten. Enthalten sein können beispielsweise aliphatische und/oder aromatische Kohlenwasserstoffe wie Toluol, Xylol, Solventnaphtha, Solvesso 100, Shellsol A, Ketone, wie Aceton, Methylethylketon oder Methylamylketon, Ester, wie Ethylacetat, Butylacetat, Pentylacetat oder Ethylethoxypropionat, Ether wie Butylglycol, Dipropylenglycolmethylether, Alkohole wie Ethylhexanol, Butoxypropanol, Isopropanol oder Butyldiglycol oder Mischungen aus den vorgenannten Lösemitteln. Bevorzugt eingesetzt werden wassermischbare organische Lösemittel.

Der pigmentierte Basislack ist wässrig. Wässrig ist eine dem Fachmann geläufige Spezifizierung von Beschichtungsmitteln, die als Lösemittel nicht ausschließlich organische Lösemittel enthalten, sondern auch auf Wasser als Lösemittel basieren. Wässrig bedeutet im Rahmen der vorliegenden Erfindung insbesondere, dass der erfindungsgemäße Basislack vorzugsweise mindestens 10 Gew.-%, besonders bevorzugt mindestens 20 Gew.-%, ganz besonders bevorzugt mindestens 25 Gew.-% Wasser, jeweils bezogen auf die Gesamtmenge des pigmentierten wässrigen Basislacks, enthält. Besonders bevorzugt ist wässrig so zu verstehen, dass neben der genannten Bedingungen "mindestens 10 Gew.-% (beziehungsweise mindestens 20 oder 25 Gew.-%) Wasser, bezogen auf die Gesamtmenge des pigmentierten wässrigen Basislacks" als weitere Voraussetzung zu erfüllen ist, dass der Anteil organischer Lösemittel in dem besagten Basislack kleiner als 25 Gew.-%, insbesondere kleiner als 20 Gew.-%, jeweils bezogen auf die Gesamtmenge des pigmentierten wässrigen Basislacks, ist.

Weiterhin kann in dem pigmentierten wässrigen Basislack mindestens ein Lackadditiv enthalten sein. Solche Lackadditive sind beispielsweise, aber nicht ausschließlich,

- Entschäumer,
- Reaktivverdünner,
- Polymerisationsinhibitoren,
- Slipadditive,
- Netzmittel wie Siloxane, fluorhaltige Verbindungen, Carbonsäurehalbester
- Katalysatoren, wie acide phosphorhaltige Katalysatoren auf Basis von beispielsweise substituierten Phosphonsäurediestern oder substituierten Phosphorsäureestern,
- Verlaufmittel,
- rheologiesteuernde Additive,
- Dispergiermittel,
- UV-Stabilisatoren,
- Füllstoffe wie Siliciumdioxid, Aluminiumsilikat oder Bariumsulfat
- und/oder Flammschutzmittel.

Solche Lackadditive sind beispielsweise im Handel von unterschiedlichen Anbietern erhältlich. Der Anteil eines jeweiligen Additivs liegt vorteilhafterweise bei maximal 10 Gew.-%, insbesondere bei maximal 5 Gew.-%, besonders bevorzugt bei maximal 3 Gew.-%, jeweils bezogen auf die Gesamtmenge des pigmentierten wässrigen Basislacks.

Die pigmentierten wässrigen Basislacke der vorliegende Erfindung können insbesondere in der Automobillackierung aber auch in der allgemeinen Industrielackierung zum Aufbau einer farbgebenden Beschichtung, insbesondere einer farbgebenden Zwischenbeschichtung im Rahmen einer Mehrschichtlackierung insbesondere auf einem Kunststoffsubstrat eingesetzt werden kann. Auf der so aufgebauten Zwischenbeschichtung wird dann häufig eine Klarlackschicht aufgebaut, wodurch die Mehrschichtbeschichtung hergestellt wird.

Die Herstellung des pigmentierten wässrigen Basislacks weist methodisch gesehen keine Besonderheiten auf, sondern erfolgt nach den üblichen und bekannten Methoden mit Hilfe von üblichen und bekannten Mischaggregaten wie Rührkesseln oder Dissolvern.

Die mit Hilfe des erfindungsgemäßen pigmentierten wässrigen Basislacks hergestellten Lackschichten besitzen eine ausgezeichnete Haftung auf Kunststoffsubstraten. Wird die resultierende Beschichtung beispielsweise einer Bewitterung ausgesetzt, so ist nach einer entsprechenden Regenerationszeit keine signifikante Verschlechterung der Haftung konstatierbar. Darüber hinaus weisen die erfindungsgemäßen wässrigen pigmentieren Basislacke eine hervorragende Lagerstabilität auf.

Die vorliegende Erfindung betrifft weiterhin ein Verfahren zur Herstellung einer Mehrschichtlackierung auf einem Kunststoffsubstrat, umfassend

(A) Aufbringen des erfindungsgemäßen pigmentierten wässrigen Basislacks auf einem Kunststoffsubstrat, woraus eine erste Lackschicht resultiert,

(B) Trocknen der der in (A) aufgebrachten Schicht,

(C) Aufbringen einer zweiten transparenten Lackschicht, und
(D) gemeinsames Härten der in (A) und (C) aufgetragenen Lackschichten.

Alle oben hinsichtlich des erfindungsgemäßen pigmentierten Basislacks bereits diskutierten Merkmale sind ebenfalls für das in Rede stehende erfindungsgemäße Verfahren bevorzugt.

**Einzusetzende Kunststoffsubstrate**

Der erfindungsgemäße pigmentierte wässrige Basislack eignet sich insbesondere zur Beschichtung von Kunststoffsubstraten. Dabei handelt es sich um solche aus üblichen Kunststoffen wie beispielsweise Polystyrol (PS), Polyvinylchlorid (PVC), Polyurethan (PUR), glasfaserverstärkte ungesättigte Polyester, Polymethylmethacrylat (PMMA), Polyphenylensulfid (PPS), Polyoxymethylen (POM), Polyphenylenether (PPE), Polyphenylenoxid (PPO), Polyharnstoff, Polybutadienterephthalat (PBT), Polycarbonat (PC), Acrylnitril-Butadien-StyrolCopolymere (ABS), Polyolefine wie Polypropylen (PP) und Polypropylen (PP) modifiziert mit Ethylen-Propylen-Dien-Mischpolymeren (EPDM). Möglich sind dabei auch Kunststoffsubstrate, die verschiedene der genannten Kunststoffe, demnach also Mischungen dieser Kunststoffe, enthalten.

Der erfindungsgemäße pigmentierte wässrige Basislack kann beispielsweise zur Beschichtung von unpolaren Kunststoffen, wie insbesondere Polyolefinen wie PP und von mit EPDM-Anteilen modifiziertem PP eingesetzt werden. Die Modifizierung von PP mit EPDM dient im Wesentlichen der Elastifizierung des Kunststoffs und bestimmt unter anderem auch die Lackierbarkeit. Bei geringen EPDM-Anteilen ist die Lackierbarkeit beziehungsweise die Haftung in der Regel schlecht. Erst bei EPDM-Anteilen von etwa 20 bis 25 Gew.-% spricht man in der Regel nicht mehr von schwer lackierbaren Kunststoffen. Der erfindungsgemäße pigmentierte wässrige Basislack eignet sich insbesondere zur Lackierung von Polypropylen/EPDM-Kunststoffen mit niedrigen EPDM-Anteilen von beispielsweise nicht höher als 25 Gew.-%, insbesondere nicht höher als 20 Gew.-%.

Darüber hinaus eignet sich der erfindungsgemäße pigmentierte wässrige Basislack zur Beschichtung von polaren Kunststoffen, wie insbesondere Polyurethanen, Polycarbonaten oder Polycarbonaten, welche mit PBT modifiziert sind. Der erfindungsgemäße pigmentierte wässrige Basislack eignet sich insbesondere zur Beschichtung von Polycarbonaten, deren Gehalt an PBT beispielsweise nicht höher als 35 Gew.-%, insbesondere nicht höher als 30 Gew.-% ist.

Der erfindungsgemäße wässrige Basislack eignet sich insbesondere zur Beschichtung von unbehandelten Kunststoffsubstraten. Darunter ist zu verstehen, dass kein dem Fachmann bekanntes Verfahren der Vorbehandlung von Kunstoffen wie beispielsweise Beflammen, Plasmabehandlung, Abwischen mit Lösemitteln oder die elektrische Oberflächenbehandlung mittels Koronaentladung angewendet wird.

Bei den Kunststoffsubstraten kann es sich um einfache Kunststoffplatten handeln. Möglich sind als Substrate aber auch Fahrzeugkarosserien aus Kunststoffen oder bestimmte Fahrzeugteile sowie Fahrzeuganbau- und -zubehörteile für sowohl den Fahrzeuginnen- als auch den Fahrzeugaußenbereich.

**Herstellung von Beschichtungen auf Kunststoffsubstraten**

Die Applikation des pigmentierten wässrigen Basislacks auf ein wie oben beschriebenes Kunststoffsubstrat kann durch alle üblichen Applikationsmethoden, wie beispielsweise Spritzen, Rakeln, Streichen, Giessen, Tauchen, Tränken, Träufeln oder Walzen, vorzugsweise durch Spritzapplikation, erfolgen. Dabei kann das zu beschichtende Kunststoffsubstrat als solches ruhen, wobei die Applikationseinrichtung oder -anlage bewegt wird. Indes kann auch das zu beschichtende Substrat bewegt werden, wobei die Applikationsanlage relativ zum Substrat ruht oder in geeigneter Weise bewegt wird. Vorzugsweise werden Spritzapplikationsmethoden angewandt, wie zum Beispiel Druckluftspritzen (pneumatische Applikation), Airless-Spritzen, Hochrotation, elektrostatischer Sprühauftrag (ESTA), gegebenenfalls verbunden mit Heissspritzapplikation wie zum Beispiel Hot-Air-Heissspritzen.

Die Applikation des pigmentierten wässrigen Basislacks erfolgt in den üblichen und bekannten Schichtdicken, beispielsweise in Nassfilmschichtdicken von 10 bis 200 Mikrometer, vorzugsweise von 50 bis 150 Mikrometer. Die dabei resultierenden Trockenfilmschichtdicken nach der Härtung liegen dann beispielsweise im Bereich von 2 bis 40 Mikrometer, insbesondere 5 bis 20 Mikrometer.

Üblicherweise wird auf der applizierten Basislackschicht eine Klarlackschicht aufgebracht. Bevorzugt wird die Basislackschicht vor der vor der Applikation des Klarlacks getrocknet. Unter dem Begriff Trocknen ist im Rahmen der vorliegenden Erfindung das Entfernen von Lösungsmittel aus dem applizierten Lack zu verstehen. Je nach Beschaffenheit des Bindemittels kann es hier natürlich bereits zum Auftreten von Vernetzungsreaktionen führen. Die Vernetzung ist aber noch nicht vollständig. Das heißt, es entsteht hierbei keine ausgehärtete Lackschicht. Was genau unter dem Begriff der Härtung zu verstehen ist, wird im weiteren Verlauf der Beschreibung erläutert. Das Trocknen kann zunächst bei Raumtemperatur für 5 bis 30, bevorzugt 10 bis 20 Minuten und anschließend bei Temperaturen von 30 bis 90°C,

insbesondere 50 bis 80 °C für ebenfalls 5 bis 30, bevorzugt 10 bis 20 Minuten erfolgen.

Bekanntermaßen ist ein Klarlack ein Beschichtungsstoff, der nach Applikation und Härtung eine transparente Beschichtung (die Klarlackschicht) mit schützenden und/oder dekorativen Eigenschaften bildet. Unter schützenden Eigenschaften sind beispielsweise Kratzfestigkeit und Witterungsbeständigkeit, insbesondere UV-Beständigkeit, zu verstehen. Als dekorative Eigenschaft ist beispielsweise ein guter Glanz zu verstehen. Bei den einzusetzenden Klarlacken handelt es sich um die auf dem Gebiet der Kunststofflackierung üblich verwendeten Klarlacke, deren Auswahl und Einsatz dem Fachmann bekannt ist (vergleiche hierzu auch Römpp-Lexikon Lacke und Druckfarben, Georg Thieme Verlag, Stuttgart, New York, 1998, Seite 325).

Die generellen Applikationsmethoden des Klarlacks entsprechen denen, wie sie weiter oben für den Basislack beschrieben wurden.

Die Applikation des Klarlacks erfolgt in den üblichen und bekannten Schichtdicken, beispielsweise in Nassfilmschichtdicken von 50 bis 250 Mikrometer, vorzugsweise von 100 bis 180 Mikrometer. Die dabei resultierenden Trockenfilmschichtdicken nach der Härtung liegen dann beispielsweise im Bereich von 15 bis 80 Mikrometer, insbesondere 25 bis 50 Mikrometer.

Die Härtung von Basislack und Klarlack erfolgt dann gemeinsam. Diese weist keine methodischen Besonderheiten auf, sondern erfolgt nach den üblichen und bekannten Methoden wie beispielsweise Erhitzen in einem Umluftofen oder durch Bestrahlen mit IR-Lampen. Möglich ist auch die aktinische Härtung durch beispielsweise UV-Strahlung bei strahlenhärtenden Systemen. Die Härtungsbedingungen, insbesondere die Härtungstemperaturen, richten sich beispielsweise nach der Temperaturempfindlichkeit der verwendeten Kunststoffsubstrate sowie nach den eingesetzten wässrigen Beschichtungsmitteln, beispielsweise danach, ob das jeweils eingesetzte wässrige Beschichtungsmittel selbst- oder fremdvernetzende Bindemittel und gegebenenfalls Vernetzer enthält. So kann die Härtung zum Beispiel im Bereich der Raumtemperatur oder auch bei erhöhten Temperaturen im Bereich von beispielsweise 40°C bis 120°C, bevorzugt von 60°C bis 90°C erfolgen. Auch die Zeitdauer der Härtungsphase wird individuell gewählt und ist unter anderem abhängig von den schon genannten Faktoren (beispielsweise Wahl der Bindemittel und/oder der Härtungstemperaturen). Beispielsweise kann die Härtung über einen Zeitraum von 5 bis 120 Minuten, bevorzugt 10 Minuten bis 40 Minuten, erfolgen. Der Härtung kann gegebenenfalls auch eine Ablüft- beziehungsweise Vortrocknungsphase vorausgehen, beispielsweise bei Raumtemperatur für eine Zeitdauer von 1 bis 60 Minuten. Welche Härtungsbedingungen bei welchen Substraten und/oder Beschichtungsmitteln anzuwenden sind, gehört zum allgemeinen Fachwissen auf dem Gebiet, sodass die Bedingungen vom Fachmann angepasst und ausgewählt werden können.

Insgesamt eignen sich die so beschichteten Kunststoffsubstrate für das ästhetisch und technisch anspruchsvolle Gebiet der Fahrzeuglackierung, insbesondere der Automobillackierung. Die beschichteten Kunststoffsubstrate, insbesondere die mit einer Mehrschichtbeschichtung beschichteten Kunststoffsubstrate, können als Fahrzeugteile und Fahrzeuganbau- und -zubehörteile sowohl für den Innen- als auch im Außenbereich von Fahrzeugen verwendet werden. Neben einer hervorragenden Haftung der hergestellten Beschichtungen beziehungsweise Mehrschichtbeschichtungen, lässt sich zudem ein guter und variabler dekorativer Effekt erzielen.

Die vorliegende Erfindung betrifft weiterhin eine Mehrschichtlackierung auf einem Kunststoffsubstrat, umfassend in dieser Reihenfolge übereinanderliegend

(A) mindestens eine erste Lackschicht, welche aus der Applikation des erfindungsgemäßen pigmentierten wässrigen Basislack resultiert, und
(B) mindestens eine zweite transparente Lackschicht.

Als Kunststoffsubstrate können beispielsweise alle vorstehend genannten verwendet werden. Alle oben hinsichtlich des erfindungsgemäßen pigmentierten Basislacks bereits diskutierten Merkmale sind ebenfalls für die erfindungsgemäße Mehrschichtlackierung bevorzugt. Bei der zweiten transparenten Lackschicht handelt es sich bevorzugt um eine Klarlackschicht. Wie oben bereits beschrieben, können hierzu grundsätzlich alle dem Fachmann bekannten Klarlacke verwendet werden. Die Herstellung der erfindungsgemäßen Mehrschichtlackierung kann wie oben bereits im Zuge der Beschreibung des erfindungsgemäßen pigmentierten wässrigen Basislacks beschrieben erfolgen. Es ist zudem bevorzugt, dass das besagte Kunststoffsubstrat unbehandelt ist. Was unter einem unbehandelten Kunststoffsubstrat zu verstehen ist, wurde oben bereits dargelegt.

Die vorliegende Erfindung betrifft schließlich auch die Verwendung mindestens eines alpha,omega-hydroxyfunktionalisierten Oligoesters zur Haftungsverbesserung in einem pigmentierten wässrigen Basislack, wobei der besagte alpha,omega-hydroxyfunktionalisierte Oligoester eine OH-Zahl von 25 bis 95 mg KOH/g, einen theoretischen Kohlenstoff-Kohlenstoff-Doppelbindungsgehalt von 0,5 bis 2,5 mmol/g, ein zahlenmittleres Molekulargewicht von 2500 bis 6000 g/mol und ein gewichtsmittleres Molekulargewicht von 15000 bis 30000 g/mol besitzt, der besagte alpha,omega-hydroxyfunktionalisierte Oligoester zudem mindestens eine teilweise oder vollständig versalzte Säuregruppe enthält und wobei zudem die Summe über die gewichtsprozentualen Anteile aller alpha,omega-hydroxyfunktionalisierten Oligoester 0,5 bis 10 Gew.-% bezogen auf den Gesamtfestkörperanteil des pigmentierten wässrigen Basislacks beträgt.

Alle oben hinsichtlich des erfindungsgemäßen pigmentierten Basislacks bereits diskutierten Merkmale sind ebenfalls für die in Rede stehende erfindungsgemäße Verwendung bevorzugt.

Bevorzugt wird der besagte alpha,omega-hydroxyfunktionalisierte Oligoester zur Haftungsverbesserung auf einem unbehandelten Kunststoffsubstrat eingesetzt. Was unter einem unbehandelten Kunststoffsubstrat zu verstehen ist, wurde oben bereits dargelegt.

Die Haftung lässt sich beispielsweise mit Hilfe des Dampfstrahltests nach DIN EN ISO 66552 (Parameter Daimler) bestimmen. Bevorzugt wird der erfindungsgemäße alpha,omega-hydroxyfunktionalisierte Oligoester zur Haftungsverbesserung zwischen Kunststoffsubstrat und Basislackschicht eingesetzt. Ebenfalls bevorzugt wird der erfindungsgemäße alpha,omega-hydroxyfunktionalisierte Oligoester zur Verbesserung der Haftung zwischen Kunststoffsubstrat und Basislackschicht nach einer Bewitterung eingesetzt. Eine solche Bewitterung lässt sich beispielsweise durch den Konstant-Klima-Test gemäß der DIN EN ISO 6270-2 CH simulieren.

Zudem wird der besagte alpha,omega-hydroxyfunktionalisierte Oligoester bevorzugt in solchen pigmentierten wässrigen Basislacken zur Haftungsverbesserung verwendet, welche in der Automobilserienlackierung eingesetzt werden.

**Messmethoden**

Festkörperbestimmung:

Die Festkörperbestimmung von Beschichtungszusammensetzungen erfolgt nach EN ISO 3251 (1 bis 2 g, 1 Stunde, 125 °C). Dabei werden ca. 2 g Probe in eine vorher getrocknete Aluminiumschale eingewogen und 60 Minuten bei 125 °C im Trockenschrank getrocknet, im Exsikkator abgekühlt, und dann zurückgewogen. Der Rückstand bezogen auf die Gesamtmenge der eingesetzten Probe entspricht dem Festkörperanteil.

Die Festkörperbestimmung der erfindungsgemäßen alpha,omega-hydroxyfunktionalisierten Oligoester erfolgt nach EN ISO 3251 (1 g, 1 Stunde, 130 °C). Dabei werden 1 g Probe in eine vorher getrocknete Aluminiumschale eingewogen und 60 Minuten bei 130 °C im Trockenschrank getrocknet, im Exsikkator abgekühlt, und dann zurückgewogen. Der Rückstand bezogen auf die Gesamtmenge der eingesetzten Probe entspricht dem Festkörperanteil.

Bestimmung der Säurezahl:

Die Bestimmung der Säurezahl erfolgt gemäß DIN 53402. Dabei werden die in der Probe enthaltenden freien Säuren mit einer Kaliumhydroxid-Standardlösung in Anwesenheit eines Farbindikators titriert. Die Säurezahl entspricht der Masse an Kaliumhydroxid in mg, die zur Neutralisation von 1 g Prüfmaterial unter festgelegten Bedingungen erforderlich ist.

Bestimmung der OH-Zahl:

Die Bestimmung der OH-Zahl erfolgt nach DIN 53240. Dabei werden die OH-Gruppen durch Acetylierung mit einem Überschuss Essigsäureanhydrid umgesetzt. Anschließend wird das überschüssige Essigsäureanhydrid durch Wasserzugabe zur Essigsäure aufgespalten und die gesamte Essigsäure mit ethanolischer KOH zurücktitriert. Die OH-Zahl gibt die Menge KOH in mg an, die der bei der Acetylierung von 1g Substanz gebundenen Menge Essigsäure äquivalent ist.

Bestimmung des zahlengewichteten und des massengewichteten Molekulargewichts:

Die Bestimmung des zahlengewichteten und des massengewichteten Molekulargewichts erfolgte mittels Gelpermeationschromatographie mit Tetrahydrofuran als Elutionsmittel und unter Verwendung eines Polystyrol-Standards. Das Säulenmaterial besteht aus Styrol-Divinylbenzol-Copolymeren. Der alpha,omega-hydroxyfunktionalisierte Oligoester wird in seiner neutralisierten Form gemessen. Zur Neutralisation wird DMEA eingesetzt.

Die Erfindung wird anhand der folgenden Beispiele näher erläutert.

**Beispiele**

**1. Darstellung der erfindungsgemäß einzusetzenden alpha,omega-hydroxyfunktionalisierten Oligoester**

**1.1. Darstellung des erfindungsgemäß einzusetzenden alpha,omega-hydroxyfunktionalisierten Oligoesters (A)**

Die in Tabelle 1.1 bezeichneten Edukte wurden wie im Folgenden dargestellt in den dort angegeben molaren

Verhältnissen zur Reaktion gebracht.

Zunächst wurden Maleinsäureanhydrid (MSA), Adipinsäure (AD) und 1,6-Hexandiol (HD) in einen 4-Liter-Reaktor aus rostfreiem Stahl, ausgestattet mit einer Kolonne, einem Kühler sowie einem Wasserabscheider gegeben. Anschließend erfolgte die Zugabe von 3% Xylol als Schleppmittel und 0.1% Methylhydrochinon (die prozentualen Angaben beziehen sich auf die Menge des eingesetzten MSA, AD und HD). Das resultierende Reaktionsgemisch wurde innerhalb von 5 Stunden unter Magerluft aufgeheizt. Während der gesamten Reaktionszeit überschritt die Temperatur des Reaktionsgemischs 230 °C nicht. Nachdem eine Säurezahl von 2 mg KOH/g bezogen auf den Oligoester erreicht worden war, wurde das Reaktionsgemisch auf 80 °C abgekühlt. Der resultierende alpha,omega-hydroxyfunktionalisierte Oligoester (I) wies die folgenden Kennzahlen auf:

OH-Zahl: 148 mg KOH/g
Säurezahl: 2 mg KOH/g
Zahlenmittleres Molekulargewicht: 1412 g/mol
Gewichtsmittleres Molekulargewicht: 3313 g/mol
Theoretischer Kohlenstoff-Kohlenstoff-Doppelbindungsgehalt: 1,87 mmol/g

Anschließend wurde *in situ* Trimellithsäureanhydrid (TMSA) hinzugegeben. Danach wurde langsam bis 160°C aufgeheizt und diese Temperatur beibehalten, bis eine Säurezahl von 35 mg KOH/g bezogen auf den resultierenden Oligoester erreicht worden war.

Nach erneutem Abkühlen auf 80 °C wurde Dimethylethanolamin (DMEA) über einen Zeitraum von 30 Minuten hinzugegeben. Anschließend erfolgte die Zugabe von Wasser um einen Festkörpergehalt von 25 Gew.-% einzustellen über einen Zeitraum von 30 Minuten. Die resultierende Dispersion wurde für eine weitere Stunde bei 80 °C gerührt und anschließend auf Raumtemperatur abgekühlt. Der resultierende erfindungsgemäß einzusetzende alpha,omega-hydroxyfunktionalisierte Oligoester (A) wies die folgenden Kennzahlen auf:
OH-Zahl: 58 mg KOH/g
Säurezahl: 35 mg KOH/g
Zahlenmittleres Molekulargewicht: 3618 g/mol
Gewichtsmittleres Molekulargewicht: 25400 g/mol
Theoretischer Kohlenstoff-Kohlenstoff-Doppelbindungsgehalt: 1,66 mmol/g

Tabelle 1.1: Stoffmengen der einzusetzenden Edukte in mol.

| | Rohstoff | Stoffmengen |
|---|---|---|
| 1. Stufe | | |
| 1 | MSA | 2,48 |
| 2 | AD | 2,72 |
| 3 | HD | 7,01 |
| 2. Stufe | | |
| 4 | TMSA | 0,95 |
| Neutralisation | | |
| 5 | DMEA | 0,77 |
| 6 | Wasser | - |
| Festkörper [%] | | 25 |

**1.2 Darstellung des erfindungsgemäß einzusetzenden alpha,omega-hydroxyfunktionalisierten Oligoesters (B)**

Die in Tabelle 1.2 bezeichneten Edukte wurden wie im Folgenden dargestellt in den dort angegeben molaren Verhältnissen zur Reaktion gebracht.

Zunächst wurden Maleinsäureanhydrid (MSA), Adipinsäure (AD), Tricyclodecandiol (TCD) und 1,6-Hexandiol (HD) in einen 4-Liter-Reaktor aus rostfreiem Stahl, ausgestattet mit einer Kolonne, einem Kühler sowie einem Wasserabscheider gegeben. Anschließend erfolgte die Zugabe von 3% Xylol als Schleppmittel und 0,001% Methylhydrochinon (die prozentualen Angaben beziehen sich auf die Menge des eingesetzten MSA, AD, TCD und HD). Das resultierende Reaktionsgemisch wurde innerhalb von 5 Stunden unter Magerluft aufgeheizt. Während der gesamten Reaktionszeit überschritt die Temperatur des Reaktionsgemischs 230°C nicht. Nachdem eine Säurezahl von 2 mg KOH/g bezogen auf den Oligoester erreicht worden war, wurde das Reaktionsgemisch auf 80 °C abgekühlt. Der resultierende alpha,omega-hydroxyfunktionalisierte Oligoester (I) wies die folgenden Kennzahlen auf:

OH-Zahl: 136 mg KOH/g
Säurezahl: 2 mg KOH/g
Zahlenmittleres Molekulargewicht: 1516 g/mol
Gewichtsmittleres Molekulargewicht: 3560 g/mol
Theoretischer Kohlenstoff-Kohlenstoff-Doppelbindungsgehalt: 1,81 mmol/g

Anschließend wurde *in situ* TMSA hinzugegeben. Danach wurde langsam bis 160°C aufgeheizt und diese Temperatur beibehalten, bis eine Säurezahl von 32,7 mg KOH/g bezogen auf den resultierenden Oligoester erreicht worden war.

Nach erneutem Abkühlen auf 80 °C wurde DMEA und Wasser über einen Zeitraum von 30 Minuten hinzugegeben. Die resultierende Dispersion wurde für eine weitere Stunde bei 80 °C gerührt und anschließend auf Raumtemperatur abgekühlt. Der resultierende erfindungsgemäß einzusetzende alpha,omega-hydroxyfunktionalisierte Oligoester (B) wies die folgenden Kennzahlen auf:
OH-Zahl: 56 mg KOH/g
Säurezahl: 32,7 mg KOH/g
Zahlenmittleres Molekulargewicht: 2278 g/mol
Gewichtsmittleres Molekulargewicht: 18700 g/mol
Theoretischer Kohlenstoff-Kohlenstoff-Doppelbindungsgehalt: 1,63 mmol/g

Tabelle 1.2: Stoffmengen der einzusetzenden Edukte in mol.

| | Rohstoff | Stoffmengen |
|---|---|---|
| 1. Stufe | | |
| 1 | MSA | 1,979 |
| 2 | AD | 1,804 |
| 3 | TCD | 2,502 |
| 4 | HD | 2,670 |
| 2. Stufe | | |
| 5 | TMSA | 0,693 |
| Neutralisation | | |
| 6 | DMEA | 0,47 |
| 7 | Wasser | - |
| Festkörper [%] | | 34,8 |

## 2. Herstellung von den alpha,omega-hydroxyfunktionalisierten Oligoester enthaltenden schwarzen wässrigen Basislacken

Es wurde ein handelsüblicher schwarzer wässriger Basislack eingesetzt. Die Zusammensetzung ist in Tabelle 2 wiedergegeben. Der alpha,omega-hydroxyfunktionalisierte Oligoester wurde mittels eines Dissolvers hinzugegeben. Es wurden Zusammensetzungen mit 1,5%, 2,5%, 5% und 7,5% des erfindungsgemäß einzusetzenden alpha,omega-hydroxyfunktionalisierten Oligoesters (A) (Additiv) hergestellt. Es handelte sich hier um gewichtsprozentuale Angaben, welche sich auf den Gesamtfestkörperanteil des schwarzen wässrigen Basislacks beziehen.

Tabelle 2: Zusammensetzung des eingesetzten schwarzen wässrigen Basislacks. Die Angaben Gew.-% bezieht sich auf die Gesamtmenge des Basislacks.

| Komponente | Menge (in Gew.-%) |
|---|---|
| Handelsübliches Thixotropierungsmittel (Laponite RD) | 18,2 |
| Wasser | 9,3 |
| Handelsübliche Dispersion eine OH-funktionellen Polyurethanharzes (Wassergehalt: 66,0 Gew.-%, organische Lösemittel: 6,3 Gew.-%) | 31,2 |

(fortgesetzt)

| Komponente | Menge (in Gew.-%) |
|---|---|
| Handelsübliche Dispersion eine OH-funktionellen Polyesterharzes (Wassergehalt: 17,7 Gew.-%, organische Lösemittel: 20,0 Gew.-%) | 3,0 |
| Butoxypropanol | 2,0 |
| Cymel 327 (handelsübliches Melaminformaldehydharz) | 4,2 |
| TMDD BG 52 (handelsübliches Netzmittel) | 0,5 |
| DMEA 10%ig in Wasser | 1,5 |
| Handelsübliche Dispersion eine OH-funktionellen Acrylatharzes (Wassergehalt: 49,5 Gew.-%, organische Lösemittel: 13,0 Gew.-%) | 5,1 |
| Foamstar MF324 (handelsüblicher Entschäumer) | 0,5 |
| Ethylhexanol | 4,0 |
| BYK 347 (handelsübliches Netzmittel) | 0,5 |
| Pluriol P900 (handelsübliches Polyethylenglycol) | 2,0 |
| Isopropanol | 2,2 |
| Viscalex HV 30 (handelsübliches Rheologiemittel) | 0,4 |
| WBL Tönpaste (10%-ige Dispersion des Pigments "Russ Monarch 1400" in Wasser | 10,1 |
| WBL Tönpaste (50%-ige Dispersion des Pigments "Titanrutil 2310" in Wasser | 0,04 |

### 3. Herstellung der beschichteten Kunststoffsubstrate

Es wurden verschiedene Kunststoffsubstrate, jeweils in Form von Testplatten mit einer Größe von 10 x 10 x 0,3 cm eingesetzt. Als Kunststoffwerkstoffe wurden PC-PBT, PUR sowie PP-EPDM eingesetzt.

Die Applikation des addivierten schwarzen wässrigen Basislacks erfolgte pneumatisch. Zunächst wird die erhaltene Basislackschicht für 10 Minuten bei Raumtemperatur und anschließend für weitere 10 Minuten bei 80 °C im Umluftofen getrocknet.

Daraufhin wurde ein Klarlack appliziert. Die Zusammensetzung des eingesetzten Klarlacks ist in Tabelle 3 wiedergegeben. Zunächst erfolgt die gemeinsame Härtung des applizierten wässrigen Basislacks und des applizierten Klarlacks für 10 Minuten bei Raumtemperatur und anschließend für 30 Minuten bei 80 °C im Umluftofen.

Im dem resultierenden Substrat weist die Basislackschicht eine Trockenfilmschichtdicke von 15 Mikrometer und die Klarlackschicht eine Trockenfilmschichtdicke von 35 Mikrometer auf.

Tabelle 3: Zusammensetzung des eingesetzten Klarlacks. Die Angaben Gew.-% bezieht sich auf die Gesamtmenge des Klarlacks.

| Komponente | Menge (in Gew.-%) |
|---|---|
| Parocryl AC 30.3 (Lösemittelhaltiges Acrylatharz) | 50,93 |
| Setal 82166 SS-55 | 25,51 |
| Cyclohexanon | 3,912 |
| Solvent Naphtha 230/290 | 1,955 |
| Parocryl AC 30.3 Lösemittelhaltiges Acrylatharz) | 9,782 |
| Disolucion de Silicona F-2 | 1,535 |
| Verlaufsmittel (5%-ige Lösung von Baysilon OL44) | 0,488 |
| Tinuvin 292 (handelsüblicher Lichtstabilisator) | 0,93 |
| Tinuvin 1130 (handelsüblicher UV-Absorber) | 0,93 |

(fortgesetzt)

| Komponente | Menge (in Gew.-%) |
|---|---|
| Katalysator (1%-ige Lösung von Dibutylzinndilaurat) | 0,587 |
| Cumylhydroperoxid (80-%-ig) | 0,391 |
| 1-Methoxypropylacetat-2 | 3,05 |

**4. Untersuchung der Haftungseigenschaften**

Die Haftungseigenschaften der hergestellten Beschichtungen wurden mittels Dampfstrahltest (DIN EN ISO 66552) untersucht. Dabei wurde ein Dampfstrahl eine Minute lang bei einer Temperatur von 60 °C mit 67 bar in einer Entfernung von 10 cm senkrecht auf den Prüfkörper gerichtet. Von jeder Beschichtung wurden insgesamt 6 Proben hergestellt und jeweils einzeln untersucht. Anschließend wurde der Mittelwert gebildet.

Die Bewertung der Haftung erfolgte über ein Notensystem mit den Noten 0 bis 5, wobei die Note 0 für Beschichtungen vergeben wurde, die nach der Dampfstrahlbehandlung keine sichtbaren Spuren aufwiesen (sehr gute Haftung) und die Note 5 für Beschichtungen vergeben wurde, die nach dem Dampfstrahltest deutlich abgelöste Bereiche aufwiesen (ungenügende Haftung).

Tabelle 4 zeigt die Haftungseigenschaften der hergestellten Beschichtungen in Abhängigkeit von der Menge des eingesetzten Additivs (erfindungsgemäß einzusetzender alpha,omega-hydroxyfunktionalisierter Oligoester (A)). Demnach lässt sich durch den Einsatz des erfindungsgemäß einzusetzenden alpha,omega-hydroxyfunktionalisierten Oligoesters eine signifikante Verbesserung der Haftung erzielen.

| Substrat | % Additiv | Haftung |
|---|---|---|
| PC-PBT[1] | 0 | 3,8 |
| | 1,5 | 2,8 |
| | 5 | 0,0 |
| | 7,5 | 0,0 |
| PUR-RIM[2] | 0 | 2,6 |
| | 1,5 | 2,3 |
| | 5 | 2,0 |
| | 7,5 | 0,0 |
| PP-EPDM[3] | 0 | 2,0 |
| | 1,5 | 1,5 |
| | 5 | 1,0 |
| | 7,5 | 0,5 |

[1] PC-PBT, XENOY CL 101D (Sabic)

[2] PUR – reaction injection molded (Bayer)

[3] 108MF10 (Sabic)

Tabelle 4: Haftungseigenschaften des Systems schwarzer wässriger Basislack + Klarlack auf Kunststoffsubstraten (erfindungsgemäß einzusetzender alpha,omega-hydroxyfunktionalisierter Oligoester (A)).

**5. Haftung nach Konstant-Klima-Test**

Die schwarzen wässrigen Basislacke wurden wie oben beschrieben hergestellt und appliziert und anschließend einer Bewitterung in einer Klimakammer ausgesetzt (Konstant-Klima-Test gemäß DIN EN ISO 6270-2 CH). Dabei wurden die Proben 10 Tage in der Klimakammer bei 100 % Luftfeuchtigkeit und 40 °C gelagert. Anschließend wurde die Haftung der Proben 1 h und 24 h nach Entnahme aus der Klimakammer wie oben bereits beschrieben mittels Dampfstrahltest untersucht.

Es wurden jeweils 5% der erfindungsgemäß einzusetzenden alpha,omega-hydroxyfunktionalisierten Oligoester (A) und (B) bezogen auf den Gesamtfestkörperanteil des schwarzen wässrigen Basislacks eingesetzt. Die Ergebnisse für die Substrate PC-PBT und PUR-RIM und den erfindungsgemäß einzusetzenden alpha,omega-hydroxyfunktionalisierten Oligoester (A) sowie PC-PBT in Kombination mit dem erfindungsgemäß einzusetzenden alpha,omega-hydroxyfunktionalisierten Oligoester (B) sind in den Tabellen 5.1 und 5.2 dargestellt. Demnach lässt sich durch den Einsatz der erfindungsgemäß einzusetzenden alpha,omega-hydroxyfunktionalisierten Oligoesters eine signifikante Verbesserung der Haftung nach Lagerung der Proben in einer Klimakammer erzielen.

| Substrat | Probe | Zeit | Haftung |
|---|---|---|---|
| PC-PBT | Ohne Additiv | 1 h | 3,1 |
| | 5Gew.-% (A) | | 0,0 |
| | Ohne Additiv | 24 h | 4,2 |
| | 5 Gew.-% (A) | | 0,0 |
| PUR-RIM | Ohne Additiv | 1 h | 3,1 |
| | 5 Gew.-% (A) | | 0,6 |
| | Ohne Additiv | 24 h | 2,5 |
| | 5 Gew.-% (A) | | 2,0 |

Tabelle 5.1: Haftungseigenschaften des Systems schwarzer wässriger Basislack + Klarlack auf Kunststoffsubstraten (erfindungsgemäß einzusetzenden alpha,omega-hydroxyfunktionalisierten Oligoesters (A)).

| Substrat | Probe | Zeit | Haftung |
|---|---|---|---|
| PC-PBT | Ohne Additiv | 1 h | 3,0 |
| | 5% (B) | | 0 |
| | Ohne Additiv | 24 h | 4,2 |
| | 5% (B) | | 0 |

Tabelle 5.2: Haftungseigenschaften des Systems schwarzer wässriger Basislack + Klarlack auf PC-PBT (erfindungsgemäß einzusetzender alpha,omega-hydroxyfunktionalisierter Oligoester (B)).

**6. Einfluss des Pigments**

Es wurden ein silberner, ein weißer und ein roter wässriger Basislack hergestellt. Die Zusammensetzungen der besagten Basislacke sind in Tabelle 6.1 wiedergegeben. Die erfindungsgemäß einzusetzenden alpha,omega-hydroxyfunktionalisierten Oligoester (A) und (B) wurden in unterschiedlichen Konzentrationen mittels eines Dissolvers hinzugegeben.

Tabelle 6.1: Zusammensetzung unterschiedlich pigmentierter wässriger Basislacke (Silber, Weiß und Rot); alle Angaben in Gew.-% bezogen auf das Gesamtgewicht des jeweiligen Basislacks.

| Komponente | **Silber** | **Weiß** | **Rot** |
|---|---|---|---|
| Laponite (handelsübliches Thixotropierungsmittel) | 32,620 | 13,900 | 17,700 |
| Wasser | 13,500 | 10,800 | 16,450 |
| Handelsübliche Dispersion eine OH-funktionellen Polyurethanharzes (Wassergehalt: 66,0 Gew.-%, organische Lösemittel: 6,3 Gew.-%) | 14,900 | 6,200 | 15,500 |
| Handelsübliche Dispersion eine OH-funktionellen Polyesterharzes (Wassergehalt: 17,7 Gew.-%, organische Lösemittel: 20,0 Gew.-%) | 7,600 | 4,100 | 5,000 |
| Melaminformaldehydharz (93% Festkörper); Isobutyl-/methylverethert | - | - | 4,100 |
| Butylglycol | 4,000 | 5,200 | 5,900 |
| Cymel 3020 (handelsübliches Melaminformaldehydharz) | - | 2,300 | - |
| Cymel 203 (handelsübliches Melaminformaldehydharz) | - | 4,500 | - |
| Cymel 1133 (handelsübliches Melaminformaldehyharz) | 3,500 | - | - |
| Neutralisationslösung | 0,400 | 0,950 | 1,200 |
| Handelsübliche Dispersion eine OH-funktionellen Acrylatharzes (Wassergehalt: 49,5 Gew.-%, organische Lösemittel: 13,0 Gew.-%) | - | 3,000 | - |
| Rheologie Additiv Verdicker | | 0,500 | |
| Parocryl VP 567750 (Handelsübliche Dispersion eines OH-funktionellen Acrylatharzes in organischen Lösemitteln) | 5,100 | - | 4,400 |
| Viscalex Lösung | 4,000 | | |
| Polyesterbasierte Mattierpaste | | 2,300 | |
| Ethylhexanol | | 1,500 | 1,400 |
| Nacure 2500 | | | 0,700 |
| TMDD BG 54 (handelsübliches Netzmittel) | 2,000 | | |
| BYK 346 (handelsübliches Netzmittel) | | | 0,600 |
| Pluriol P900 (handelsübliches Polyethylenglycol) | 1,000 | 1,000 | 1,600 |
| polyacrylatbasierte blaue Tönpaste | 0,040 | | |
| polyacrylatbasierte weiße Tönpaste | 0,200 | | |
| polyurethan- polyesterbasierte schwarze Tönpaste | | 0,130 | 0,800 |
| polyurethanbasierte grüne Tönpaste | | 0,004 | |
| polyacrylatbasierte weiße Tönpaste | | 36,300 | - |
| polyacrylatbasierte gelbe Tönpaste | | 0,150 | |
| polyacrylatbasierte rote Tönpaste | | | 12,000 |

(fortgesetzt)

| Komponente | Silber | Weiß | Rot |
|---|---|---|---|
| Aluminiumeffektpigment (Festkörpergehalt = 65%) | 5,340 | | |
| Dipropylenglycolmethylether | 5,000 | | |
| Rotes Pigment | | | 2,700 |
| Effektpigment auf Basis von Glimmer | | | 2,200 |

Die Lacke wurden wie oben beschrieben mit unterschiedlichen Mengen der erfindungsgemäß einzusetzenden alpha,omega-hydroxyfunktionalisierten Oligoester (A) und (B) addidiviert. Die resultierenden Basislacke wurden auf PC-PBT Substrate appliziert und ihre Haftung mittels Dampfstrahltest untersucht. Die Ergebnisse sind in den Tabellen 6.1 und 6.2 dargestellt. Demnach lässt sich durch den Einsatz des erfindungsgemäß einzusetzenden alpha,omega-hydroxyfunktionalisierten Oligoesters eine signifikante Verbesserung der Haftung erzielen.

| Substrate | % Additive | Haftung (weiß) | Haftung (silber) |
|---|---|---|---|
| PC-PBT | 0 | 4,7 | 5 |
| | 2,5 | 0 | 0,2 |
| | 5 | 0 | 0 |
| | 7,5 | 0 | 0 |

Tabelle 6.2: Haftungseigenschaften des Systems wässriger Basislack + Klarlack auf PC-PBT für Basislacke mit unterschiedlichen Farben (erfindungsgemäß einzusetzender alpha,omega-hydroxyfunktionalisierter Oligoester (A)).

| Substrat | % Additive | Haftung (weiß) | Haftung (rot) | Haftung (silber) |
|---|---|---|---|---|
| PC-PBT | 0 | 4,7 | 3,2 | 5 |
| | 2,5 | 0 | 0 | 0 |
| | 5 | 0 | 0 | 0 |
| | 7,5 | 0 | 0 | 0 |

Tabelle 6.3: Haftungseigenschaften des Systems wässriger Basislack + Klarlack auf PC-PBT für Basislacke mit unterschiedlichen Farben (erfindungsgemäß einzusetzender alpha,omega-hydroxyfunktionalisierter Oligoester (B)).

### 7. Einfluss der Lagerung

Die schwarzen wässrigen Basislacke wurden wie oben beschrieben hergestellt. Es wurden jeweils 7,5% der erfindungsgemäß einzusetzenden alpha,omega-hydroxyfunktionalisierten Oligoester (A) und (B) bezogen auf den Gesamtfestkörperanteil des schwarzen wässrigen Basislacks eingesetzt. Die so hergestellten Basislacke wurden bei Raumtemperatur insgesamt sieben Monate gelagert. Nach einem, drei und sieben Monaten wurde die Basislacke wie unter

Punkt 3 beschrieben auf ein PC-PBT Substrat appliziert und die Haftung mittels Dampfstrahltest untersucht. Die Ergebnisse sind in Tabelle 7 dargestellt. Demnach lässt sich auch nach mehrmonatiger Lagerung keine signifikante Verschlechterung der resultierenden Haftungseigenschaften feststellen.

Tabelle 7: Haftungseigenschaften des Systems wässriger Basislack + Klarlack auf PC-PBT nach Lagerung; (A): erfindungsgemäß einzusetzender alpha,omega-hydroxyfunktionalisierter Oligoester (A), (B): erfindungsgemäß einzusetzender alpha,omega-hydroxyfunktionalisierter Oligoester (B).

| Zeit (Monate) | Additiv | Haftung |
|---|---|---|
| 0 | Ohne Additiv | 5 |
| | (A) | 0 |
| | (B) | 0 |
| 1 | Ohne Additiv | 5 |
| | (A) | 0 |
| | (B) | 0 |
| 3 | Ohne Additiv | 5 |
| | (A) | 0 |
| | (B) | 0,5 |
| 7 | Ohne Additiv | 5 |
| | (A) | 0 |

**Patentansprüche**

1. Pigmentierter wässriger Basislack, **dadurch gekennzeichnet, dass** dieser mindestens einen alpha,omega-hydroxyfunktionalisierten Oligoester enthält, welcher eine OH-Zahl von 25 bis 95 mg KOH/g, einen theoretischen Kohlenstoff-Kohlenstoff-Doppelbindungsgehalt von 0,5 bis 2,5 mmol/g, ein zahlenmittleres Molekulargewicht von 2500 bis 6000 g/mol und ein gewichtsmittleres Molekulargewicht von 15000 bis 30000 g/mol besitzt, der besagte alpha,omega-hydroxyfunktionalisierte Oligoester zudem mindestens eine teilweise oder vollständig versalzte Säuregruppe enthält und wobei die Summe über die gewichtsprozentualen Anteile aller alpha,omega-hydroxyfunktionalisierten Oligoester 0,5 bis 10 Gew.-% bezogen auf den Gesamtfestkörperanteil des pigmentierten wässrigen Basislacks beträgt.

2. Pigmentierter wässriger Basislack nach Anspruch 1, **dadurch gekennzeichnet, dass** die Summe über die gewichtsprozentualen Anteile aller aller alpha,omega-hydroxyfunktionalisierten Oligoester 1,5 bis 7,5 Gew.-% bezogen auf den Gesamtfestkörperanteil des pigmentierten wässrigen Basislacks beträgt.

3. Pigmentierter wässriger Basislack nach mindestens einem der Ansprüche 1 und 2, **dadurch gekennzeichnet, dass** der mindestens eine alpha,omega-hydroxyfunktionalisierten Oligoester herstellbar ist durch die Umsetzung

(i) mindestens eines alpha,omega-hydroxyfunktionalisierten Oligoesters (I), welcher eine OH-Zahl von 30 bis 170 mg KOH/g, einen theoretischen Kohlenstoff-Kohlenstoff-Doppelbindungsgehalt von 1 bis 2,5 mmol/g, ein zahlenmittleres Molekulargewicht von 800 bis 2200 g/mol und ein massengewichtetes Molekulargewicht von 1000 bis 6000 g/mol besitzt,
(ii) mit mindestens einem cyclischen Dicarbonsäureanhydrid der Strukturformel (I)

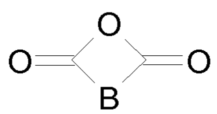

wobei es sich bei B um einen aliphatischen oder aromatischen Rest handelt, welcher mindestens eine Säuregruppe enthält,

mit der Maßgabe, dass die aus der Öffnung der Dicarbonsäureanhydridgruppe des cyclischen Dicarbonsäureanhydrids der Strukturformel (I) resultierenden Carbonsäuregruppen vollständig mit dem alpha,omega-hydroxyfunktionalisierten Oligoester (I) unter Ausbildung jeweils einer Esterbindung umgesetzt werden, und
(iii) die mindestens eine Säuregruppe teilweise oder vollständig versalzt wird.

4. Pigmentierter wässriger Basislack nach mindestens einem der Ansprüche 1 bis 3, **dadurch gekennzeichnet, dass** der besagte alpha,omega-hydroxyfunktionalisierte Oligoester die Strukturformel (II) besitzt:

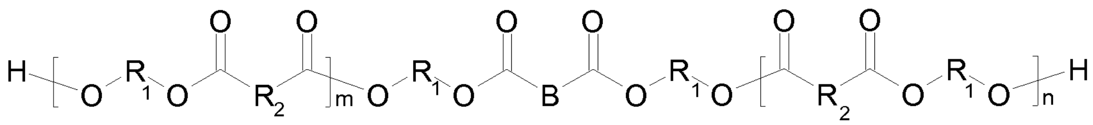

(II)

wobei

- die (m + n + 2) Reste $R_1$ unabhängig voneinander ausgewählt sind aus der Gruppe der linearen oder cyclischen Alkylenreste,
- die (m + n) Reste $R_2$ unabhängig voneinander ausgewählt sind aus der Gruppe der Alkylen- oder Alkenylenreste, wobei das Verhältnis von Alkylen zu Alkenylenresten gerade so gewählt ist, dass der besagte alpha,omega-hydroxyfunktionalisierte Oligoester der Strukturformel (II) einen theoretischen Kohlenstoff-Kohlenstoff-Doppelbindungsgehalt von 0,5 bis 2,5 mmol/g besitzt,
- die Indizes m und n so gewählt sind, dass das zahlenmittlere Molekulargewicht des besagten alpha,omega-hydroxyfunktionalisierten Oligoesters der Strukturformel (II) 2500 bis 6000 g/mol beträgt, und
- es sich bei dem Rest B um einen aliphatischen oder aromatischen Rest handelt, welcher mindestens eine Säuregruppe enthält, welche teilweise oder vollständig versalzt ist.

5. Pigmentierter wässriger Basislack nach Anspruch 4, **dadurch gekennzeichnet, dass** der besagte alpha,omega-hydroxyfunktionalisierte Oligoester der Strukturformel (II) ein zahlenmittleres Molekulargewicht von 3500 bis 4500 g/mol besitzt.

6. Pigmentierter wässriger Basislack nach mindestens einem der Ansprüche 4 und 5, **dadurch gekennzeichnet, dass** der besagte alpha,omega-hydroxyfunktionalisierte Oligoester der Strukturformel (II) ein gewichtsmittleres Molekulargewicht von 20000 bis 26000 g/mol besitzt.

7. Pigmentierter wässriger Basislack nach mindestens einem der Ansprüche 5 bis 6, **dadurch gekennzeichnet, dass** in dem alpha,omega-hydroxyfunktionalisierten Oligoester der Strukturformel (II) die (m + n) Reste $R_2$ ausgewählt sind aus der Gruppe der linearen Alkylenreste mit 4 bis 8 Kohlenstoffatomen und aus der Gruppe der linearen Alkenylenreste mit 2 bis 4 Kohlenstoffatomen.

8. Pigmentierter wässriger Basislack nach mindestens einem der Ansprüche 5 bis 7, **dadurch gekennzeichnet, dass** in dem besagten alpha,omega-hydroxyfunktionalisierten Oligoester der Strukturformel (II) die (m + n + 2) Reste $R_1$ ausgewählt sind aus der Gruppe der linearen Alkylenreste mit 6 bis 10 Kohlenstoffatomen.

9. Pigmentierter wässriger Basislack nach mindestens einem der Ansprüche 5 bis 8, **dadurch gekennzeichnet, dass** in dem besagten alpha,omega-hydroxyfunktionalisierten Oligoester der Strukturformel (II) die (m + n + 2) Reste $R_1$ ausgewählt sind aus der Gruppe der linearen Alkylenreste mit 6 bis 10 Kohlenstoffatomen sowie aus der Gruppe der cyclischen Alkylenreste mit 6 bis 10 Kohlenstoffatomen.

10. Pigmentierter wässriger Basislack nach mindestens einem der Ansprüche 5 bis 9, **dadurch gekennzeichnet, dass** es sich bei dem Rest B um einen Rest

$$A(Q)_K,$$

handelt, wobei

- A ein aliphatischer oder aromatischer Rest ist,
- es sich bei dem Rest Q um eine teilweise oder vollständig versalzte Säuregruppe handelt, und

- K = 1 bis 3 beträgt.

**11.** Pigmentierter wässriger Basislack nach Anspruch 10, **dadurch gekennzeichnet, dass** es sich bei A um einen Benzolrest handelt, bei dem sich die beiden Carbonsäureestergruppen gemäß Strukturformel (II) jeweils in alpha-Stellung zueinander befinden und zudem K = 1 gilt.

**12.** Pigmentierter wässriger Basislack nach Anspruch 11, **dadurch gekennzeichnet, dass** es sich bei Q um eine teilweise oder vollständig versalzte Carbonsäuregruppe handelt.

**13.** Mehrschichtlackierung auf einem Kunststoffsubstrat, umfassend in dieser Reihenfolge übereinanderliegend

(A) mindestens eine erste Lackschicht, welche aus der Applikation des pigmentierten wässrigen Basislacks gemäß mindestens einem der Ansprüche 1 bis 12 resultiert, und
(B) mindestens eine zweite transparente Lackschicht.

**14.** Verfahren zur Herstellung einer Mehrschichtlackierung auf einem Kunststoffsubstrat, umfassend

(A) Aufbringen des pigmentierten wässrigen Basislacks gemäß mindestens einem der Ansprüche 1 bis 12 auf einem Kunststoffsubstrat, woraus eine erste Lackschicht resultiert,
(B) Trocknen der der in (A) aufgebrachten Schicht,
(C) Aufbringen einer zweiten transparenten Lackschicht, und
(D) gemeinsames Härten der in (A) und (C) aufgetragenen Lackschichten.

**15.** Verwendung mindestens eines alpha,omega-hydroxyfunktionalisierten Oligoesters zur Haftungsverbesserung in einem pigmentierten wässrigen Basislack, wobei der besagte alpha,omega-hydroxyfunktionalisierte Oligoester eine OH-Zahl von 25 bis 95 mg KOH/g, einen theoretischen Kohlenstoff-Kohlenstoff-Doppelbindungsgehalt von 0,5 bis 2,5 mmol/g, ein zahlenmittleres Molekulargewicht von 2500 bis 6000 g/mol und ein gewichtsmittleres Molekulargewicht von 15000 bis 30000 g/mol besitzt, der besagte alpha,omega-hydroxyfunktionalisierte Oligoester zudem mindestens eine teilweise oder vollständig versalzte Säuregruppe enthält und wobei die Summe über die gewichtsprozentualen Anteile aller alpha,omega-hydroxyfunktionalisierten Oligoester 0,5 bis 10 Gew.-% bezogen auf den Gesamtfestkörperanteil des pigmentierten wässrigen Basislacks beträgt.

## Claims

**1.** Pigmented aqueous basecoat material **characterized in that** it comprises at least one alpha,omega-hydroxy-functionalized oligoester which possesses an OH number of 25 to 95 mg KOH/g, a theoretical carbon-carbon double bond content of 0.5 to 2.5 mmol/g, a number-average molecular weight of 2500 to 6000 g/mol and a weight-average molecular weight of 15 000 to 30 000 g/mol, said alpha,omega-hydroxy-functionalized oligoester further comprising at least one partially or completely salified acid group, and the sum of the weight percentage fractions of all the alpha,omega-hydroxy-functionalized oligoesters being 0.5 to 10 wt%, based on the total solids fraction of the pigmented aqueous basecoat material.

**2.** Pigmented aqueous basecoat material according to Claim 1, **characterized in that** the sum of the weight percentage fractions of all the alpha,omega-hydroxy-functionalized oligoesters is 1.5 to 7.5 wt%, based on the total solids fraction of the pigmented aqueous basecoat material.

**3.** Pigmented aqueous basecoat material according to at least one of Claims 1 and 2, **characterized in that** the at least one alpha,omega-hydroxy-functionalized oligoester is preparable by reacting

(i) at least one alpha,omega-hydroxy-functionalized oligoester (I) which possesses an OH number of 30 to 170 mg KOH/g, a theoretical carbon-carbon double bond content of 1 to 2.5 mmol/g, a number-average molecular weight of 800 to 2200 g/mol and a mass-weighted molecular weight of 1000 to 6000 g/mol,
(ii) with at least one cyclic dicarboxylic anhydride of the structural formula (I)

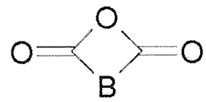

where B is an aliphatic or aromatic radical which contains at least one acid group, with the proviso that the carboxylic acid groups resulting from the opening of the dicarboxylic anhydride group of the cyclic dicarboxylic anhydride of the structural formula (I) are reacted completely with the alpha,omega-hydroxy-functionalized oligoester (I), to form an ester bond in each case, and
(iii) the at least one acid group is partially or completely salified.

4. Pigmented aqueous basecoat material according to at least one of Claims 1 to 3, **characterized in that** said alpha,omega-hydroxy-functionalized oligoester possesses the structural formula (II):

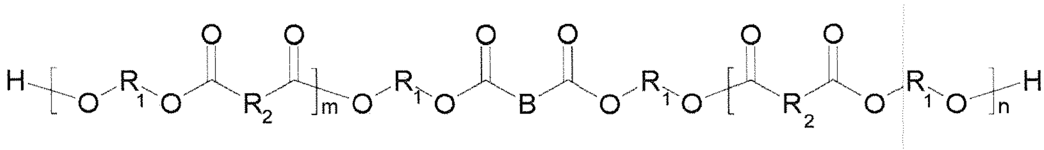

(II)

where

- the (m + n + 2) radicals $R_1$ independently of one another are selected from the group of linear or cyclic alkylene radicals,
- the (m + n) radicals $R_2$ independently of one another are selected from the group of alkylene or alkenylene radicals, the ratio of alkylene to alkenylene radicals being just selected such that said alpha,omega-hydroxy-functionalized oligoester of the structural formula (II) possesses a theoretical carbon-carbon double bond content of 0.5 to 2.5 mmol/g,
- the indices m and n are selected such that the number-average molecular weight of said alpha,omega-hydroxy-functionalized oligoester of the structural formula (II) is 2500 to 6000 g/mol, and
- the radical B is an aliphatic or aromatic radical which contains at least one acid group which is partially or completely salified.

5. Pigmented aqueous basecoat material according to Claim 4, **characterized in that** said alpha,omega-hydroxy-functionalized oligoester of the structural formula (II) possesses a number-average molecular weight of 3500 to 4500 g/mol.

6. Pigmented aqueous basecoat material according to at least one of Claims 4 and 5, **characterized in that** said alpha,omega-hydroxy-functionalized oligoester of the structural formula (II) possesses a weight-average molecular weight of 20 000 to 26 000 g/mol.

7. Pigmented aqueous basecoat material according to at least one of claims 5 to 6, **characterized in that** the alpha,omega-hydroxy-functionalized oligoester of the structural formula (II) the (m + n) radicals $R_2$ are selected from the group of linear alkylene radicals having 4 to 8 carbon atoms and from the group of linear alkenylene radicals having 2 to 4 carbon atoms.

8. Pigmented aqueous basecoat material according to at least one of Claims 5 to 7, **characterized in that** in said alpha,omega-hydroxy-functionalized oligoester of the structural formula (II) the (m + n + 2) radicals $R_1$ are selected from the group of linear alkylene radicals having 6 to 10 carbon atoms.

9. Pigmented aqueous basecoat material according to at least one of Claims 5 to 8, **characterized in that** in said alpha,omega-hydroxy-functionalized oligoester of the structural formula (II) the (m + n + 2) radicals $R_1$ are selected from the group of linear alkylene radicals having 6 to 10 carbon atoms and also from the group of cyclic alkylene radicals having 6 to 10 carbon atoms.

10. Pigmented aqueous basecoat material according to at least one of Claims 5 to 9, **characterized in that** the radical

B is a radical

$$A(Q)_K,$$

where

- A is an aliphatic or aromatic radical,
- the radical Q is a partially or completely salified acid group, and
- K = 1 to 3.

**11.** Pigmented aqueous basecoat material according to Claim 10, **characterized in that** A is a benzene radical, in which the two carboxylic ester groups of structural formula (II) are each located in alpha-position to one another, and also K = 1.

**12.** Pigmented aqueous basecoat material according to Claim 11, **characterized in that** Q is a partially or completely salified carboxylic acid group.

**13.** Multicoat paint system on a plastics substrate, comprising one above another in this order

(A) at least one first coat, resulting from the application of the pigmented aqueous basecoat material according to at least one of Claims 1 to 12, and
(B) at least one second, transparent coat.

**14.** Method for producing a multicoat paint system on a plastics substrate, comprising

(A) applying the pigmented aqueous basecoat material according to at least one of Claims 1 to 12 to a plastics substrate, to give a first coat,
(B) drying the coat applied in (A),
(C) applying a second, transparent coat, and
(D) jointly curing the coasts applied in (A) and (C).

**15.** Use of at least one alpha,omega-hydroxy-functionalized oligoester for improving adhesion in a pigmented aqueous basecoat material, wherein said alpha,omega-hydroxy-functionalized oligoester has an OH number of 25 to 95 mg KOH/g, a theoretical carbon-carbon double bond content of 0.5 to 2.5 mmol/g, a number-average molecular weight of 2500 to 6000 g/mol and a weight-average molecular weight of 15 000 to 30 000 g/mol, said alpha,omega-hydroxy-functionalized oligoester further comprising at least one partially or completely salified acid group, and the sum of the weight percentage fractions of all the alpha,omega-hydroxy-functionalized oligoesters being 0.5 to 10 wt%, based on the total solids fraction of the pigmented aqueous basecoat material.

## Revendications

**1.** Laque de base aqueuse, pigmentée, **caractérisée en ce qu'**elle contient au moins un oligoester fonctionnalisé par hydroxy en positions alpha,oméga, qui présente un indice d'OH de 25 à 95 mg de KOH/g, une teneur théorique en doubles liaisons carbone-carbone de 0,5 à 2,5 mmoles/g, un poids moléculaire numérique moyen de 2500 à 6000 g/mole et un poids moléculaire pondéral moyen de 15.000 à 30.000 g/mole, ledit oligoester fonctionnalisé par hydroxy en positions alpha,oméga contenant en outre au moins un groupe acide partiellement ou complètement salifié et la somme des proportions, en pourcent en poids, de tous les oligoesters fonctionnalisés par hydroxy en positions alpha,oméga représentant 0,5 à 10% en poids par rapport à la proportion totale des corps solides de la laque de base aqueuse, pigmentée.

**2.** Laque de base aqueuse, pigmentée, selon la revendication 1, **caractérisée en ce que** la somme des proportions, en pourcent en poids, de tous les oligoesters fonctionnalisés par hydroxy en positions alpha,oméga vaut 1,5 à 7,5% en poids, par rapport à la proportion totale des corps solides de la laque de base aqueuse, pigmentée.

**3.** Laque de base aqueuse, pigmentée, selon au moins l'une quelconque des revendications 1 et 2, **caractérisée en ce que** ledit au moins un oligoester fonctionnalisé par hydroxy en positions alpha,oméga peut être préparé par la transformation

(i) d'au moins un oligoester (I) fonctionnalisé par hydroxy en positions alpha,oméga, qui présente un indice d'OH de 30 à 170 mg de KOH/g, une teneur théorique en doubles liaisons carbone-carbone de 1 à 2,5 mmoles/g, un poids moléculaire numérique moyen de 800 à 2200 g/mole et un poids moléculaire pondéré en masse de 1000 à 6000 g/mole,

(ii) avec au moins un anhydride d'acide dicarboxylique cyclique de formule de structure (I)

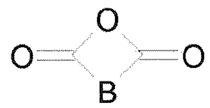

dans laquelle B représente un radical aliphatique ou aromatique, qui contient au moins un groupe acide, à condition que les groupes acide carboxylique résultant de l'ouverture du groupe anhydride d'acide dicarboxylique de l'anhydride d'acide dicarboxylique cyclique de formule de structure (I) soient complètement transformés avec l'oligoester (I) fonctionnalisé par hydroxy en positions alpha,oméga en formant à chaque fois une liaison ester, et

(iii) ledit au moins un groupe acide étant partiellement ou complètement salifié.

4. Laque de base aqueuse, pigmentée, selon au moins l'une quelconque des revendications 1 à 3, **caractérisée en ce que** ledit oligoester fonctionnalisé par hydroxy en positions alpha,oméga présente la formule de structure (II) :

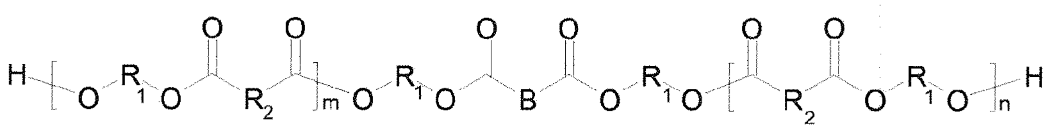

(II)

dans laquelle

- les (m + n + 2) radicaux $R_1$ sont choisis, indépendamment les uns des autres, dans le groupe des radicaux alkylène linéaires ou cycliques,
- les (m + n) radicaux $R_2$ sont choisis, indépendamment les uns des autres, dans le groupe des radicaux alkylène ou alcénylène, le rapport des radicaux alkylène aux radicaux alcénylène étant justement choisi de manière telle que ledit oligoester fonctionnalisé par hydroxy en positions alpha,oméga de formule de structure (II) présente une teneur théorique en doubles liaisons carbone-carbone de 0,5 à 2,5 mmoles/g,
- les indices m et n sont choisis de manière telle que le poids moléculaire numérique moyen dudit oligoester fonctionnalisé par hydroxy en positions alpha,oméga de formule de structure (II) est de 2500 à 6000 g/mole, et
- il s'agit, pour le radical B, d'un radical aliphatique ou aromatique qui contient au moins un groupe acide, qui est partiellement ou complètement salifié.

5. Laque de base aqueuse, pigmentée, selon la revendication 4, **caractérisée en ce que** ledit oligoester fonctionnalisé par hydroxy en positions alpha,oméga de formule de structure (II) présente un poids moléculaire numérique moyen de 3500 à 4500 g/mole.

6. Laque de base aqueuse, pigmentée, selon au moins l'une quelconque des revendications 4 et 5, **caractérisée en ce que** ledit oligoester fonctionnalisé par hydroxy en positions alpha,oméga de formule de structure (II) présente un poids moléculaire pondéral moyen de 20.000 à 26.000 g/mole.

7. Laque de base aqueuse, pigmentée, selon au moins l'une quelconque des revendications 5 à 6, **caractérisée en ce que** dans l'oligoester fonctionnalisé par hydroxy en positions alpha,oméga de formule de structure (II), les (m + n) radicaux $R_2$ sont choisis dans le groupe des radicaux alkylène linéaires comprenant 4 à 8 atomes de carbone et dans le groupe des radicaux alcénylène linéaires comprenant 2 à 4 atomes de carbone.

8. Laque de base aqueuse, pigmentée, selon au moins l'une quelconque des revendications 5 à 7, **caractérisée en ce que** dans ledit oligoester fonctionnalisé par hydroxy en positions alpha,oméga de formule de structure (II), les (m + n + 2) radicaux $R_1$ sont choisis dans le groupe des radicaux alkylène linéaires comprenant 6 à 10 atomes de

carbone.

**9.** Laque de base aqueuse, pigmentée, selon au moins l'une quelconque des revendications 5 à 8, **caractérisée en ce que** dans ledit oligoester fonctionnalisé par hydroxy en positions alpha,oméga de formule de structure (II), les (m + n + 2) radicaux $R_1$ sont choisis dans le groupe des radicaux alkylène linéaires comprenant 6 à 10 atomes de carbone ainsi que dans le groupe des radicaux alkylène cycliques comprenant 6 à 10 atomes de carbone.

**10.** Laque de base aqueuse, pigmentée, selon au moins l'une quelconque des revendications 5 à 9, **caractérisée en ce qu'**il s'agit, pour le radical B, d'un radical

$$A(Q)_K,$$

où

- A représente un radical aliphatique ou aromatique,
- il s'agit, pour le radical Q, d'un groupe acide partiellement ou complètement salifié et
- K = 1 à 3.

**11.** Laque de base aqueuse, pigmentée, selon la revendication 10, **caractérisée en ce qu'**il s'agit, pour A, d'un radical benzène, dans lequel les deux groupes ester d'acide carboxylique selon la formule de structure (II) se trouvent à chaque fois en position alpha l'un par rapport à l'autre et en outre K = 1.

**12.** Laque de base aqueuse, pigmentée, selon la revendication 11, **caractérisée en ce qu'**il s'agit, pour le radical Q, d'un groupe acide carboxylique partiellement ou complètement salifié.

**13.** Laquage multicouche sur un substrat en matériau synthétique, comprenant, dans l'ordre suivant, de manière superposée,

(A) au moins une première couche de laque qui résulte de l'application de la laque de base aqueuse pigmentée selon au moins l'une quelconque des revendications 1 à 12 et
(B) au moins une deuxième couche de laque transparente.

**14.** Procédé pour la réalisation d'un laquage multicouche sur un substrat en matériau synthétique, comprenant

(A) l'application de la laque de base aqueuse, pigmentée selon au moins l'une quelconque des revendications 1 à 12 sur un substrat en matériau synthétique, ce qui entraîne une première couche de laque,
(B) le séchage de la couche appliquée dans l'étape (A),
(C) l'application d'une deuxième couche de laque transparente et
(D) le durcissement commun des couches de laque appliquées dans (A) et (C).

**15.** Utilisation d'au moins un oligoester fonctionnalisé par hydroxy en positions alpha,oméga pour améliorer l'adhérence dans une laque de base aqueuse, pigmentée, ledit oligoester fonctionnalisé par hydroxy en positions alpha,oméga présentant un indice d'OH de 25 à 95 mg de KOH/g, une teneur théorique en doubles liaisons carbone-carbone de 0,5 à 2,5 mmoles/g, un poids moléculaire numérique moyen de 2500 à 6000 g/mole et un poids moléculaire pondéral moyen de 15.000 à 30.000 g/mole, ledit oligoester fonctionnalisé par hydroxy en positions alpha,oméga contenant en outre au moins un groupe acide partiellement ou complètement salifié et la somme des proportions, en pourcent en poids, de tous les oligoesters fonctionnalisés par hydroxy en positions alpha,oméga représentant 0,5 à 10% en poids par rapport à la proportion totale des corps solides de la laque de base aqueuse, pigmentée.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2013064506 A1
- WO 2011037818 A1
- WO 2011000525 A1
- DE 102004005207 A1
- EP 1914282 A1


### In der Beschreibung aufgeführte Nicht-Patentliteratur


- Römpp-Lexikon Lacke und Druckfarben. Georg Thieme Verlag, 1998, 73-74
- Römpp-Lexikon Lacke und Druckfarben. Georg Thieme Verlag, 1998, 274-276
- Römpp-Lexikon Lacke und Druckfarben. Georg Thieme Verlag, 1998, 451
- Römpp-Lexikon Lacke und Druckfarben. Georg Thieme Verlag, 1998, 325